# EUROPÄISCHE PATENTSCHRIFT

(11) **EP 3 212 566 B1**
(45) Veröffentlichungstag und Bekanntmachung des Hinweises auf die Patenterteilung: **10.03.2021**
(21) Anmeldenummer: 15791262.7
(22) Anmeldetag: 28.10.2015
(51) Int. Cl.: C01B 3/24, C10J 3/00

(54) **VERFAHREN UND ANLAGE ZUR HERSTELLUNG VON SYNTHESEGAS**
METHOD AND PLANT FOR THE PRODUCTION OF SYNTHESIS GAS
PROCÉDÉ ET INSTALLATION DE PRODUCTION DE GAZ DE SYNTHÈSE

(30) Priorität: 31.10.2014 DE 102014015966
(43) Veröffentlichungstag der Anmeldung: 06.09.2017
(73) Patentinhaber: Caphenia GmbH, 83233 Bernau a. Chiemsee (DE)
(72) Erfinder: BANK, Rolf, 94469 Deggendorf (DE); SCHUHBAUER, Christian, 94336 Hunderdorf (DE); LEHER, Franz, 94577 Winzer (DE)
(74) Vertreter: Wagner & Geyer
(86) Internationale Anmeldenummer: PCT/EP2015/075039
(87) Internationale Veröffentlichungsnummer: WO 2016/066716

(56) Entgegenhaltungen:
- WO-A1-2013/091878
- WO-A1-2013/091879
- WO-A1-2015/173352
- DE-A1- 2 413 558
- DE-A1-102007 046 260

## Beschreibung

Die Erfindung bezieht sich auf ein Verfahren und eine Anlage zur Herstellung von Synthesegas aus Kohlenwasserstoffen, Kohlendioxid und Wasser mit Hilfe eines Plasmas.

Unter einem Synthesegas versteht man ein industriell hergestelltes Gasgemisch, welches aus den Hauptbestandteilen Kohlenmonoxid und Wasserstoff besteht. Weit verbreitete Verfahren zur Herstellung von Synthesegas bestehen darin, einen Kohlenstoff oder einen Kohlenwasserstoff (KWS) enthaltenden Ausgangsstoff, der in fester, flüssiger oder gasförmiger Form vorliegen kann, mit Wasser, Kohlendioxid oder einem Oxidationsmittel umzusetzen. Die hierfür benötigten Wärmemengen werden dem Prozess z.B. durch Verbrennungswärme oder durch ein Plasma zugeführt.

Aus US 2 566 936 A ist ein diskontinuierliches Verfahren zur Herstellung eines Synthesegases bekannt. In einem ersten Verfahrensschritt wird ein vorgeheiztes Kohlenwasserstoffgas in Kontakt mit einem in einem Reaktor befindlichen feuerfesten Material gebracht, das auf eine Temperatur aufgeheizt ist, bei der das Kohlenwasserstoffgas aufgespalten wird. Die Reaktionsgleichung am Beispiel von Methan als KWS lautet:

CH₄ → C + 2 H₂ + 74,9 kJ/mol (1)

Der feste Kohlenstoff setzt sich auf dem feuerfesten Material ab, der Wasserstoff wird zusammen mit einer geringen Menge an nicht reagiertem Methan zwischengespeichert. In einem zweiten Verfahrensschritt wird der auf dem feuerfesten Material abgelagerte Kohlenstoff in Kontakt gebracht mit einem Gasgemisch, bestehend aus Wasserdampf, Methan und rückgeführtem Abgas aus CO, H₂, CO₂ und Methan. Bei den noch relativ hohen Temperaturen findet zunächst eine Dampfreformierung statt, bei der Methan mit dem Wasserdampf reagiert:

CH₄ + H₂O → CO + 3 H₂ + 206,2 kJ/mol (2)

Die nachfolgenden Reaktionen laufen bei niedrigeren Temperaturen in dem Maße ab, wie die eintretenden Gase die Wärme aufnehmen, darunter die heterogene Wassergas-Shift-Reaktion, auch kurz als heterogene WGS-Reaktion bezeichnet:

C + H₂O → CO + H₂ + 131,3 kJ/mol (3)

Der Kohlenstoff reagiert weiterhin in der sogenannten Boudouard-Reaktion mit dem Kohlendioxid:

C + CO₂ → 2 CO + 172,5 kJ/mol (4)

Die Zusammensetzung des aus den Reaktionen (2) bis (4) entstandenen Synthesegases lässt sich durch die Mengenanteile der Eduktkomponenten auf ein bevorzugtes Verhältnis von H₂ zu CO von ungefähr 2 : 1 einstellen. Das Synthesegas wird über eine Zwischenspeicherung einem Synthesereaktor zugeleitet. In einem abschließenden Verfahrensschritt wird das feuerfeste Material in dem Reaktor durch Verbrennungsreaktionen von im ersten Verfahrensschritt gespeichertem Wasserstoff, Restgas aus dem Synthesereaktor, zusätzlichem Methan und Luft wieder auf die Anfangstemperatur gebracht.

Aus EP 0 219 163 A2 ist ein Verfahren unter Verwendung der heterogenen WGS-Reaktion bekannt. Das Verfahren wird hier in einem konstruktiv einfacheren Festbettreaktor durchgeführt, wo die Strömungsrichtungen unter Wechsel der Zusammensetzung der zuströmenden Gase mehrfach umgekehrt werden. Alternativ wird ein kontinuierlicher Betrieb mit einem Rutschbettreaktor vorgestellt, bei dem die feuerfesten Feststoffe unten aus dem Reaktor herausgeführt und oben wieder zugeführt werden.

Ein weiteres Verfahren zur kontinuierlichen Herstellung von Synthesegas ist aus der DE 2413558 A bekannt, wobei hier jedoch der als Kohlenstoffquelle zugesetzte KWS nicht aufgespalten wird, sondern unter Einwirkung eines Plasmabrenners als Wärmequelle direkt mit Kohlendioxid und Wasserdampf reagiert. Das Synthesegas wird als Reduktionsgas verwendet, das vorzugsweise für metallurgische Prozesse und für die Anwendung als Schutzgas oder Aufkohlungsgas vorgesehen ist. Das Reduktionsgas wird hierbei im Kreislauf gefahren. Mit ihm werden Eisenoxide unter Bildung von Kohlendioxid und Wasser reduziert. Anschließend werden Kohlenwasserstoffe in den Kreislauf gegeben, die in dem Plasmabrenner und in einer nachfolgenden Mischkammer mit dem zuvor entstandenen Kohlendioxid und Wasser wieder zu Reduktionsgas reagieren. Die Reaktionsgleichungen mit Propylen als Beispiel für einen KWS lauten:

3 CO₂ + C₃H₆ → 6 CO + 3 H₂ (5)

3 H₂O + C₃H₆ → 3 CO + 6 H₂ (6)

Die Verwendung von Plasmabrennern bei Prozessen zur Herstellung von Synthesegas ist weiterhin aus der GB 2499604 A bekannt. Das Verfahren betrifft ein plasmaunterstütztes Vergasungsverfahren für kommunale Abfälle. Dabei wird in einem ersten Schritt das Ausgangsmaterial in einem Vergaser thermisch behandelt und dabei ein Synthesegas erzeugt. In einem zweiten Schritt wird das im ersten Schritt erzeugte Synthesegas in Anwesenheit von Kohlendioxid mit einem Plasma behandelt. Dabei werden bei der Vergasung entstandene staubförmigen Bestandteile und andere Fremdstoffe beseitigt. Das Kohlendioxid kann im ersten oder im zweiten Schritt zugegeben werden. Das Ergebnis ist ein aufbereitetes Synthesegas. Die Vergasung und die Plasmabehandlung können in Anwesenheit von zusätzlichem Kohlendioxid, Sauerstoff und Wasserdampf durchgeführt werden. Die Zugabe von Kohlendioxid dient dazu, als Inertgas die Reaktionsbedingungen zu kontrollieren, indem Kohlendioxid gegen einen Teil des Sauerstoffs/Wasserdampfs ausgetauscht wird. Ziel ist ein Synthesegas mit einem möglichst hohen Energieinhalt und einem Minimum an Verunreinigungen. Es kann einer WGS-Reaktion unterzogen werden, um Kohlendioxid zu erzeugen. In die Plasmabehandlungseinheit wird zerstäubtes Wasser mit einer Temperatur unter 100° C eingeleitet. Hierdurch wird das in der Plasmaeinheit hergestellte Synthesegas gekühlt, und zwar aufgrund der endothermen Reaktion des Wassers mit Kohlenstoff unter Erzeugung von Wasserstoff und Kohlenmonoxid. Das im Produktgas enthaltene Kohlendioxid wird abgeschieden und als Kreisgas dem Prozess wieder zurückgeführt.

Die AT396366B zeigt ein Verfahren zur Erzeugung eines Synthesegases unter Verwendung eines Plasmagenerators. Darin wird ein Kohlenstoff und/oder KWS sowie Oxidationsmittel, Kohlendioxid und Wasser enthaltender Ausgangsstoff gleichzeitig mit in einem Plasmagenerator erhitzter Luft in eine Reduktionskammer eingeleitet, in welcher der KWS zerlegt wird, wobei der Gehalt an CO₂ und H₂O im Produktgas maximal 5 % beträgt. Das Produktgas wird anschließend durch eine Kalksteinoder Dolomitfüllung geleitet, in welcher Schwefel entfernt, restlicher KWS zerlegt und eine Reaktion mit dem Oxidationsmittel erreicht wird.

Aus US 2009/0064581 A1 ist ein plasmaunterstütztes Vergasungssystem für kommunale Abfälle in einem dreizonigen Reaktor bekannt. Das hier verwendete Verfahren der Vergasung ist allgemein ein exothermer thermo-chemischer Prozess, bei dem bei hohen Temperaturen kohlenstoffhaltige Brennstoffe, wie Kohle oder Biomasse, durch unvollständige Verbrennung und Reduktion in ein Synthesegas umgewandelt werden, welches hauptsächlich aus Kohlenmonoxid, Wasserstoff, Methan und Inertgasen besteht. Die in US 2009/0064581 A1 verwendeten Plasmabrenner sind in der mittleren und in der letzten, dritten Zone angeordnet und können unter anderem mit Wasserdampf oder Kohlendioxid betrieben werden, wobei diese direkt mit dem Abfall zu Synthesegas reagieren. Das Synthesegas wird dann in einer Quencheinheit auf etwa 800°C abgekühlt, danach in einer Wärmerückgewinnungseinheit auf etwa 110° C gekühlt, und schließlich erfolgt als dritte, letzte Stufe in einem Gaswäscher die Endabkühlung auf etwa 50° C. Das vorgestellte Vergasungssystem ist eine Variante der bekannten Dampfreformierung, bei der kohlenstoffhaltige Energieträger unter Einwirkung von Wasserdampf zu Synthesegas umgesetzt werden, wie es beispielhaft in Reaktionsgleichung (2) eingangs bereits beschrieben wurde. Die eingesetzten Plasmabrenner dienen bei dem vorgestellten Verfahren ausschließlich der Zuführung von Reaktionswärme zu den zu vergasenden kohlenstoffhaltigen Abfallstoffen mit gleichzeitiger Zufuhr von Sauerstoff, mit Sauerstoff angereicherter Luft, Dampf oder Kohlendioxid. Eine Spaltung von Kohlenwasserstoffen in den Plasmabrennern ist nicht vorgesehen.

WO 2013/091878 A1 beschreibt ein Verfahren und eine Vorrichtung zum Umwandeln von Kohlendioxid CO₂ in Kohlenmonoxid CO unter Verwendung von Kohlenwasserstoffen. Aus dem Kohlenmonoxid kann Synthesegas erzeugt werden, welches wiederum in synthetische, funktionalisierte und/oder nicht-funktionalisierte Kohlenwasserstoffe umgewandelt werden kann. Dadurch kann Kohlendioxid aus industriellen Prozessen umgewandelt werden, und die in die Atmosphäre abgegebene Menge an Kohlendioxid kann verringert werden. Insbesondere weist das Verfahren folgende Schritte auf: Aufspalten eines Kohlenwasserstoff enthaltenden Fluids zu Kohlenstoff und Wasserstoff in einem Kohlenwasserstoffkonverter durch einen Energieeintrag, der wenigstens teilweise durch Wärme geleistet wird, wobei der Kohlenstoff und der Wasserstoff nach der Aufspaltung eine Temperatur von wenigstens 200°C aufweist; Leiten von wenigstens einem Teil des Kohlenstoffs, der aus der Aufspaltung gewonnen wurde, von dem Kohlenwasserstoffkonverter in einen CO₂-Konverter; Einleiten von CO₂, das aus einem Verbrennungskraftwerk oder aus einem anderen Industrieprozess stammt, der geeignete Mengen an CO₂ erzeugt, in den CO₂-Konverter; Vermischen des CO₂-Gases mit dem wenigstens einen Teil des Kohlenstoffes, der aus der Aufspaltung gewonnen wurde, wobei sich der durch die Aufspaltung gewonnene Kohlenstoff beim Vermischen mit dem CO₂-Gas um höchstens 50% in °C hinsichtlich seiner Temperatur nach der Aufspaltung abgekühlt hat; Umwandeln wenigstens eines Teils des CO₂-Gases und des durch die Aufspaltung gewonnenen Kohlenstoffes in CO bei einer Temperatur von 800 bis 1700°C.

WO 2013/091879 A1 beschreibt ein Verfahren und eine Anlage zur Erzeugung von Synthesegas aus Kohlenwasserstoffen und Wasser. Synthesegase in beliebigen Verhältnissen von CO zu Wasserstoff und/oder synthetische funktionalisierte und/oder nicht-funktionalisierte Kohlenwasserstoffe können erzeugt werden. Durch dieses Verfahren kann ein Kohlenwasserstoff enthaltendes Fluid in ein Synthesegas mit einem variablen Wasserstoffgehalt umgewandelt werden, ohne nennenswerte Mengen von CO₂ zu erzeugen. Insbesondere weist das Verfahren folgende Schritte auf: Aufspalten eines Kohlenwasserstoff enthaltenden Fluids zu Kohlenstoff und Wasserstoff durch einen Energieeintrag, der wenigstens teilweise durch Wärme geleistet wird, wobei der Kohlenstoff und der Wasserstoff nach der Aufspaltung eine Temperatur von wenigstens 200°C aufweist; In-Kontakt-Bringen von Wasser mit wenigstens einem Teil des Kohlenstoffes, der aus der Aufspaltung gewonnen wurde, bei einer Temperatur von 800 bis 1700°C, wobei sich der durch die Aufspaltung gewonnene Kohlenstoff beim In-Kontakt-Bringen mit dem Wasser um höchstens 50% in °C hinsichtlich seiner Temperatur nach der Aufspaltung abgekühlt hat; Umwandeln wenigstens eines Teils des Wassers und des durch die Aufspaltung gewonnenen Kohlenstoffes in ein Synthesegas; wobei der durch die Aufspaltung gewonnene Kohlenstoff und der durch die Aufspaltung gewonnene Wasserstoff gemeinsam mit dem Wasser in Kontakt gebracht werden.

Die US 2014/0239232 A1 betrifft ein ähnliches Vergasungssystem. Es geht hier um eine Pyrolyseeinheit für Kohlenwasserstoffe auf der Basis einer Vielzahl von Plasmabrennern zur Herstellung von Synthesegas. Die erforderliche Reaktionswärme wird durch eine Vielzahl von Plasmabrennern zugeführt mit Kohlendioxid, Wasserdampf, Sauerstoff und/oder zurückgeführtem Synthesegas als Plasmagas. Die durch die Plasmabrenner eingetragenen Mengenströme werden durch ein Regelungssystem eingestellt. Der Pyrolyseeinheit wird an mehreren separaten Zuführungsstellen ein Eduktgasgemisch zugeführt, welches aus gasförmigen, flüssigen oder festen kohlenstoffhaltigen Stoffen besteht und weiterhin Kohlendioxid, Dampf oder Wasser enthalten kann. Die Mengenströme und die Zusammensetzung der Edukte werden ebenfalls geregelt zur Gewährleistung einer optimalen Synthesegaszusammensetzung für den nachfolgenden syngas-toliquid-Prozess. Das Synthesegas wird einer Zyklon-, Kühl- und Filtereinheit zugeführt. Auf Einzelheiten der Synthesegaskühlung wird nicht eingegangen.

Aus vorgenannten Schriften geht hervor, dass Plasmabrenner in erster Linie als Mittel zum Wärmeeintrag für endotherme Reaktionen bei Vergasungsreaktionen, Pyrolysen und in der Synthesegasreinigung verwendet werden. Hierbei werden Kohlenwasserstoffe und/oder kohlenwasserstoffhaltige Rohstoffe aufgespalten, die in engem zeitlichem oder räumlichen Zusammenhang direkt mit zugegebenen Wasserdampf, Kohlendioxid, Sauerstoff und/oder zurückgeführtem Synthesegas zu Synthesegas reagieren.

Die Herstellung von Synthesegas unter Verwendung von räumlich und/oder zeitlich getrennten Verfahrensschritten, bei denen zunächst Kohlenwasserstoffe in Kohlenstoff und Wasserstoff als Zwischenprodukte aufgespalten werden, ist z.B. aus eingangs beschriebenen Schriften US2566936A oder EP0219163A2 bekannt. Die hierfür benötigten Wärmemengen werden durch Verbrennungsprozesse zur Verfügung gestellt.

Im Gegensatz hierzu werden im Kvaerner-Verfahren Kohlenwasserstoffe in einem Plasmabrenner bei etwa 1600°C in reinen Kohlenstoff und Wasserstoff gemäß eingangs vorgestellter Reaktionsgleichung (1) aufgespalten. Die DE 69319621 T2 zeigt Ausgestaltungsmöglichkeiten dieses Verfahrens. Gegenüber anderen Verfahren liegen die großen Vorteile darin, dass an Stelle von Kohlendioxid reiner Kohlenstoff entsteht und dass sich durch den hohen Energieinhalt der Produkte und durch die hohe Temperatur des ebenfalls entstehenden Heißdampfs ein Wirkungsgrad von nahezu 100% ergibt, wovon etwa 48% auf den Wasserstoff entfallen, etwa 40% auf den Kohlenstoff und 10% auf den Heißdampf. Weitere Vorteile liegen darin, dass neben dem Primärenergieträger nur ein Kühlmittel und Elektrizität notwendig sind. Es entstehen keine nachzubehandelnden Nebenprodukte oder Schadstoffe. Die erforderliche elektrische Energie kann durch die Teilverstromung der Produkte bereitgestellt werden, die im Heißdampf enthaltene Energie kann zu Vorwärmung des eingesetzten KWS verwendet werden.

Ein weiterer Reaktor mit plasmaunterstützter Spaltung von KWS ist aus EP 0 616 559 A1 bekannt. Hierfür verwendbare Plasmabrenner sind in EP 0 616 753 A1 oder EP 0 616 754 A1 beschrieben. Der dabei auftretende Elektrodenverbrauch kann gemäß einem Verfahren gemäß EP 0 635 043 A1 reduziert werden, indem dem Plasmagas geringe Mengen an Methan zugemischt werden.

Aus der DE 10 2012 010 542 A1 ist weiterhin ein Verfahren zur Herstellung von Synthesegas bekannt, bei dem ähnlich wie bei EP 0 219 163 A2 zunächst ein KWS thermisch aufgespalten wird und der Kohlenstoff mit anschließend zugegebenen Wasserdampf gemäß Reaktionsgleichung (3) zu Synthesegas reagiert. Die wesentlichen Unterschiede bestehen jedoch darin, dass der KWS erstens in einem Plasma aufgespalten wird und dass zweitens der in Form von feinen Rußpartikeln im Wasserstoffstrom vorliegende Kohlenstoff durch das Plasma schon von vornherein eine so hohe Temperatur besitzt, dass eine weitere Energiezufuhr nicht mehr nötig ist. Entsprechend enthält der Reaktor auch keine feuerfesten Trägerstoffe mehr zur Abscheidung von Kohlenstoff und weitere Wärmeeinbringung durch Verbrennungsprozesse sind ebenfalls nicht mehr nötig. Die wesentlichen Reaktionsgleichungen sind aus vorgenannten Prozessen bereits bekannt. Im ersten Verfahrensschritt wird ein KWS aufgespalten, z.B.

CH₄ → C + 2 H₂ + 74,9 kJ/mol (1)

Im zweiten Verfahrensschritt reagiert der entstandene Kohlenstoff mit Wasser in der heterogenen WGS-Reaktion:

C + H₂O → CO + H₂ + 131,3 kJ/mol (3)

Daneben gibt es noch eine Reihe von meist parallel ablaufenden Sekundärreaktionen, die Einfluss auf die Hauptreaktionen haben, darunter die homogene WGS-Reaktion:

CO + H₂O → CO₂ + H₂ -41,2 kJ/mol (7)

Wegen der exothermen Reaktionscharakteristik verschieben höhere Temperaturen das Reaktionsgleichgewicht auf die linke Seite. Umgekehrt wird bei niedrigeren Temperaturen in nachteiliger Weise die Entstehung von CO₂ begünstigt. Um die exotherme Reaktion nach Gleichung (4) zurückzudrängen und so den Anteil an Kohlenmonoxid im Synthesegas zu optimieren, wird der zweite Verfahrensschritt bevorzugt bei hohen Temperaturen in einem Bereich zwischen 1000°C und 1200°C durchgeführt.

Das dabei entstehende Kohlendioxid steht mit dem Kohlenstoff über die Boudouard-Reaktion im Gleichgewicht:

C + CO₂ → 2 CO + 172,5 kJ/mol (4)

Bei der Boudouard-Gleichgewichtsreaktion gemäß Gleichung (4) verschiebt sich das Gleichgewicht bei hohen Temperaturen auf die rechte Seite. Hieraus ergibt sich eine für den Fachmann bekannte Gleichgewichtsverteilung, beispielsweise gemäß nachstehender Tabelle für 1 bara.

**Boudouard-Gleichgewichtstabelle**

| Temperatur [°C] | CO₂ [%] | CO [%] |
|---|---|---|
| 450 | 98 | 2 |
| 600 | 77 | 23 |
| 700 | 42 | 58 |
| 800 | 6 | 94 |
| 900 | 3 | 97 |
| 1000 | 1 | 99 |

In dem Prozess kann das Verhältnis von Wasserstoff zu Kohlenmonoxid im Endprodukt Synthesegas in weiten Bereichen verändert werden, ohne nennenswerte Mengen an Kohlendioxid zu erzeugen. Hierfür kann die Menge des zugegebenen Wassers verändert werden oder der Wasserstoff kann nach dem ersten Verfahrensschritt wenigstens teilweise abgetrennt werden und dem Gas aus dem zweiten Verfahrensschritt so zugegeben werden, dass sich ein gewünschtes Verhältnis von Wasserstoff zu Kohlenmonoxid einstellt. Die im Synthesegas enthaltene Wärmeenergie wird wenigstens zum Teil zum Vorwärmen des zugeführten Wassers verwendet.

Die DE 10 2012 015 314 A1 beschreibt einen ähnlichen Prozess mit dem Unterschied, dass das Hauptprodukt Kohlenmonoxid ist und dem Prozess Kohlendioxid statt Wasser zugegeben wird. Die maßgeblichen Reaktionsgleichungen sind die gleichen, jedoch sind die chemischen Gleichgewichte durch die Zugabe von Kohlendioxid statt Wasser anders. Auch hier entstehen Kohlenmonoxid und Wasserstoff in getrennten Schritten. Ebenfalls kann die im entstandenen Kohlenmonoxid und/oder Wasserstoff enthaltene Wärmeenergie über einen Wärmeübertrager zum Vorwärmen des CO₂ verwendet werden.

Der Nachteil der bisherigen Verfahren ist, dass ein Einstellen des Verhältnisses von Wasserstoff / Kohlenmonoxid (H₂/CO) im Synthesegas nicht realisiert werden kann, ohne zusätzlichen Wasserstoff beizufügen bzw. überschüssiges Kohlenmonoxid anderweitig zu verwenden oder im diskontinuierlichen Betrieb zu arbeiten. Weiterhin fehlen Angaben zu optimalen Bedingungen bezüglich einem gewünschten H₂/CO-Verhältnis und zur Temperaturführung zur Herstellung von flüssigen KWS, bei denen die gleichzeitige Entstehung von störenden Nebenprodukten minimiert wird.

Aufgabe der Erfindung ist es, Synthesegas mit einem einstellbaren Verhältnis von H₂ : CO flexibler und effizienter und dabei gleichzeitig weitgehend frei von Nebenprodukten herzustellen. Aufgabe der Erfindung ist es insbesondere, Kohlenwasserstoffverbindungen aufzuspalten und die dabei entstehenden Produkte Wasserstoff und Kohlenstoff mit einem Verfahren zu Synthesegas umzusetzen, welches eine höhere Effizienz und Flexibilität aufweist, als aus dem Stand der Technik bekannt ist. Weiterhin ist es Aufgabe der Erfindung, die Temperatur der Produktgase so zu führen, dass einerseits eine optimale Reaktionsführung gewährleistet ist und andererseits das Kühlmittel einen maximalen Energieinhalt erhält. Eine weitere Aufgabe der Erfindung ist die Einstellung der Reaktionsbedingungen derart, dass das Verhältnis von H₂ zu CO im Produktgas in einem engen Verhältnisbereich einstellbar ist, um eine optimale Zusammensetzung im Hinblick auf eine nachgeschaltete Fischer-Tropsch-Synthese zu erhalten.

Erfindungsgemäß wird diese Aufgabe mit einem Verfahren gemäß Anspruch 1 und einer Anlage gemäß Anspruch 12 gelöst. Die erfindungsgemäßen Maßnahmen umfassen die Kombination eines ersten Schritts, bei dem eine Kohlenwasserstoffverbindung zu Wasserstoff und Kohlenstoff aufgespalten wird, mit einem zweiten Schritt, in welchem eine Boudouardreaktion und eine heterogene WGS-Reaktion abläuft und mit einem anschließenden Quenchen der Produktströme aus diesen Schritten.

Bei dem erfindungsgemäßen Verfahren zur Erzeugung von Synthesegas wird zunächst in einem Verfahrensschritt a) ein KWS mit Hilfe eines Plasmas zu Kohlenstoff und Wasserstoff aufgespalten. Das Plasma wird in einem oder in mehreren Plasmageneratoren erzeugt, welche sich in einem Kohlenwasserstoffkonverter (KWS-Konverter) befinden. Als Verfahren zur Spaltung des Kohlenwasserstoffes in Kohlenstoff und Wasserstoff kann dabei das Plasmabogenverfahren - wie das unter dem Namen Kvaerner carbon black & hydrogen process kcb&h bekannte von der Firma Kvaerner (jetzt Aker Solutions) entwickelte Verfahren - angewendet werden. Dabei wird ein mittels der Zufuhr eines extrem heißen Gases (Plasma), welches eine hohe Energiedichte besitzt, die Kohlenwasserstoffverbindung aufgespalten. Hierzu werden aus dem Stand der Technik bekannte Plasmabrenner oder angepasste Ausführungen derselben verwendet.

In einem Verfahrensschritt b) wird Wasserdampf dem Gasstrom zugegeben und mit mindestens einem Teil des gewonnenen Produktes aus a) mit den Hauptbestandteilen Kohlenstoff und Wasserstoff umgesetzt, vorzugsweise bei Temperaturen im Bereich von 800°C bis 1700°C.

Im Verfahrensschritt b) wird Kohlendioxid dem Gasstrom zugegeben und mit mindestens einem Teil des gewonnenen Produkts aus a) mit den Hauptbestandteilen Kohlenstoff und Wasserstoff umgesetzt. Dabei reagiert ein Teil des durch die Aufspaltung gewonnenen Kohlenstoffes mit dem Kohlendioxid zu Kohlenmonoxid, vorzugsweise bei Temperaturen im Bereich von 800°C bis 1700°C.

Die Umsetzung des Kohlenstoffs erfolgt dabei in einem Kohlenstoffkonverter (C-Konverter). Die Art der eingesetzten KWS ist dabei nicht besonders beschränkt, jedoch werden bevorzugt Erdgas, Methan, SNG (synthetic natural gas) und / oder Schweröl verwendet. Dem C-Konverter kann entweder nur eine Sorte oder eine Mischung mehrerer dieser Stoffe zugeführt werden.

Die Reaktionen im Verfahrensschritt b) sind endotherme Reaktionen. Die erforderliche zuzugebende Wärmemenge wird in erster Linie im Plasmabrenner erzeugt. Die Wärmemenge ist dabei in der Regel nicht so groß, dass die Reaktionen vollständig ablaufen können. Daher ist es erforderlich, dass nach einem gewissen Grad der endothermen Reaktionen zusätzlich Wärme zugeführt wird, um einen maximalen Umsatz von Kohlenstoff zu gewährleisten. Diese zusätzliche Wärmemenge wird bevorzugt so groß sein, dass eine Temperatur des Reaktionsgemisches von 800° C nicht unterschritten wird.

Ist der gewünschte Umsatzgrad und das gewünschte Verhältnis von Wasserstoff zu Kohlenmonoxid erreicht, so wird das Reaktions- bzw. Produktgas aus dem Verfahrenschritt b) erfindungsgemäß gequencht. Würde man das Reaktionsgas nicht quenchen, so wäre das Energieniveau noch so hoch, dass viele chemische Reaktionen noch im Gleichgewicht stehen, wodurch es zu unerwünschten Rückreaktionen kommen würde, siehe Boudouard-Gleichgewichtstabelle weiter oben.

Nach dem Quenchen kann das Produktgas durch weitere Wärmeübertrager auf die für die weiteren Verarbeitungsschritte optimale Temperatur gebracht werden. Gegebenenfalls werden weiterhin Reinigungsstufen vorgesehen. Alle Kühleinrichtungen und ggf. Reinigungsstufen können einteilig oder mehrteilig ausgeführt werden. Wird das Produktgas einem Fischer-Tropsch-Reaktor (FT-Reaktor) zur Herstellung von funktionellen und nicht-funktionellen Kohlenwasserstoffen zugeleitet, so kann das Produktgas ggf. vor Eintritt in den FT-Reaktor noch konditioniert werden.

Die Kombination des oben erwähnten Kvaerner-Verfahrens mit den heterogenen Reaktionen der Boudouardreaktion und der Kohlenstoffvergasung liefert ein hochwertiges Synthesegas, welches neben Kohlenmonoxid und Wasserstoff nur geringe Anteile an unerwünschten Nebenprodukten aufweist und somit eine einfache Weiterverwendung ermöglicht.

Bei vielen industriellen Prozessen und bei Kraftwerken mit Verbrennungsprozessen fallen große Mengen an Kohlendioxid an, welches als klimaschädlicher Stoff gilt. Durch Verwendung dieses Gases zur Herstellung von Kohlenwasserstoffen wird somit ein Beitrag zum Klimaschutz geleistet. Das erfindungsgemäße Verfahren ist effizienter als andere Verfahren, wie z.B. nicht nachhaltige Verfahren wie das CCS-Verfahren (carbon capture and storage = Kohlendioxidabscheidung und Lagerung), bei dem das Kohlendioxid energieintensiv nur aus dem Kreislauf genommen, aber nicht wirklich beseitigt wird. In dieser Hinsicht kann der Betrieb dieser CCS-Anlagen in der Weise durch das erfindungsgemäße Verfahren optimiert werden, dass diese als Zwischenspeicher für das hier beschriebene erfindungsgemäße Verfahren dienen. Diese Vorgehensweise würde bei dem erfindungsgemäßen Verfahren sogar dessen Versorgungssicherheit bezüglich des Rohstoffs Kohlendioxid verbessern.

Da das erfindungsgemäße Verfahren ein kontinuierliches Verfahren ist, kann es relativ leicht in bestehende kontinuierliche Prozesse integriert werden und dort auch äußerst effizient arbeiten.

Das Verfahren ist weiterhin flexibel bezüglich der Art der eingesetzten KWS. Es eignet sich z.B. in besonderem Maße zur Nutzung von KWS-Quellen, die ansonsten ungenutzt vernichtet werden, wie z.B. Begleitgase bei der Erdölförderung. Durch die Spaltung im Plasmabrenner entstehen immer die gleichen Produkte Kohlenstoff und Wasserstoff, wobei sich lediglich die Mengenanteile ändern.

Die Wirkung der erfindungsgemäßen Merkmale kann sinnvoll ergänzt und verstärkt werden durch nachfolgende Merkmale.

Die Ströme von Kohlendioxid und Wasserdampf können grundsätzlich an einem gleichen Strömungsabschnitt zugegeben werden. Es ist auch möglich, den Reaktor im Bereich der Zugabestellen in mindestens zwei getrennte Strömungskanäle aufzuteilen. Bevorzugt wird jedoch Kohlendioxid und Wasserdampf nacheinander folgend zugegeben, sodass zunächst Kohlendioxid zugegeben und die endotherme Reaktion mit dem Kohlendioxid durchgeführt wird. Erst nachdem das Kohlendioxid weitgehend mit dem Kohlenstoff zu Kohlenmonoxid umgesetzt ist, wird Wasserdampf zugegeben und die endotherme Reaktion mit dem Wasserdampf durchgeführt. Diese Vorgehensweise wird aus zwei Gründen bevorzugt. Zunächst ist das Ziel der Kohlenstoffvergasung durch Zugabe von Wasserdampf zu Kohlenstoff die Erhöhung des Wasserstoffanteils. Erstens würde der Wasserdampf die Reaktion mit dem Kohlendioxid behindern, weil der Wasserdampf mit dem Kohlenstoff der dortigen Reaktion konkurriert. Man lässt also erst einmal die Reaktion mit dem Kohlendioxid bis zum gewünschten Umsetzungsgrad weiterlaufen, so dass noch ausreichend Kohlenstoff für die Reaktion mit dem Wasserdampf übrig ist. Zweitens findet die Reaktion mit dem Kohlendioxid bei einer höheren Temperatur statt, die im Verlauf der Reaktion sinkt, was der Reaktion mit dem Wasserdampf entgegen kommt, da diese bei niedrigeren Temperaturen abläuft. Das erfindungsgemäße Verfahren mit den aufeinander folgenden Schritten der KWS-Aufspaltung, CO₂-Zugabe mit CO-Herstellung und H₂O-Zugabe mit Herstellung von CO und H₂ unterscheidet sich somit grundlegend von konventionellen Vergasungsverfahren, bei denen ein KWS-haltiger Ausgangsstoff thermisch, teilweise auch unter Plasmaeinfluss, aufgespalten wird und unter gleichzeitiger Beteiligung von Wasserdampf und Kohlendioxid zu Synthesegas umgesetzt wird.

Dabei kann es erforderlich sein, das Reaktionsgas vor der Wasserdampfzugabe zusätzlich aufzuheizen, wenn das Reaktionsgas durch die vorangegangene endotherme Reaktion so weit abgekühlt sein sollte, dass für die Reaktion mit dem Wasserdampf keine optimalen Reaktionsbedingungen mehr gegeben sind.

In einer alternativen Ausführung ist es auch möglich, die die Reaktionen im Verfahrensschritt b) mehrmals hintereinander auszuführen, ggf. unter Wärmezufuhr an geeigneten Stellen.

Dem Reaktionsgas wird zusätzlich Wärme zugeführt, da die im Plasma erzeugte Wärmemenge zur Durchführung der folgenden endothermen Reaktionen nicht ausreicht. Dies kann auf verschiedene Arten erfolgen. Zunächst können die jeweiligen Zugabemengen an Kohlendioxid und/oder Wasser entsprechend vorgewärmt werden. Andere Möglichkeiten sind der Wärmeeintrag im Reaktorinneren durch Wärmeübertrager, elektrische Heizungen oder mit Brennern betriebene Heizungen. Je nach Ausführung wird die Wärme eher durch Konvektion oder durch Strahlung übertragen. Bei Einsatz von eingebauten Heizungen werden diese bevorzugt konstruktiv so gestaltet, dass Ablagerungen durch im Gasstrom enthaltene Rußpartikel vermieden werden. Durch eine Regeleinrichtung wird in jedem Fall dafür Sorge getragen, dass die für die jeweiligen Reaktionen notwendige Temperatur eingehalten wird und somit der Umsatz des Kohlenstoffs möglichst hoch wird.

Eine noch andere Möglichkeit des Wärmeeintrags besteht in der Mitverbrennung von Teilen des in den Reaktor eingeführten Kohlenwasserstoffs. Für diese Teiloxidation ist die Zufuhr von reinem Sauerstoff notwendig. Die Zufuhr von Sauerstoff enthaltender Luft ist nicht geeignet, da der in Luft enthaltende Stickstoff bei den hohen Reaktionstemperaturen zu unerwünschten und auch toxischen Verbindungen reagieren kann, die in nachgeschalteten Reinigungsstufen aufwändig entfernt werden müssten. Die Menge des reinen Sauerstoffs muss genau dosiert werden, damit sich die Temperatur nicht zu sehr erhöht. Die Reaktionsprodukte der Methanverbrennung sind CO₂ und H₂O. Diese Stoffe sind bereits planmäßige Edukte des Prozesses und haben damit keinen negativen Einfluss. Sie müssen lediglich bei der erfindungsgemäßen Zudosierung der beiden Stoffe berücksichtigt werden.

Bevorzugt wird im Schritt c) der Produktstrom aus dem Schritt b) auf eine Temperatur von 400°C oder unter 400°C gequencht.

In der weiter oben angegebenen Boudard-Gleichgewichtstabelle sind die chemischen Gleichgewichte der Boudouard-Reaktion in Abhängigkeit von der Temperatur dargestellt. Diese Gleichgewichte stellen sich ein, wenn die Temperatur langsam verändert wird. In diesem Beispiel also würde das Zielprodukt Kohlenmonoxid bei niedrigen Temperaturen im Bereich von etwa 400°C nahezu vollständig wieder zurück zu Kohlendioxid reagieren. Diese Rückreaktion kann man verhindern, indem man die Temperatur schlagartig auf ein Niveau bringt, auf welchem chemische Umsetzungen nicht mehr stattfinden. Die auf einem hohen Temperaturniveau bestehende Gemischzusammensetzung bleibt auf diese Weise unterhalb einer Grenztemperatur erhalten. Diese schnelle Abkühlung wird auch als Quenchen bezeichnet. Die dabei auftretende Temperaturänderungsgeschwindigkeit ist vom jeweiligen Prozess abhängig.

Erst ab einer Temperatur unterhalb von 400°C ist man sicher, dass die Reaktionen gestoppt werden. Das Temperaturniveau von 400°C hat weiterhin den Vorteil, dass damit ein energetisch hochwertiger Hochdruckdampf zur weiteren Verwendung im anlageneigenen Dampfnetz erzeugt werden kann. Bevorzugt wird die Temperatur des Produktgases auf eine Temperatur im Bereich von 300°C bis 400°C oder bis knapp unterhalb von 400°C und besonders bevorzugt auf eine Temperatur im Bereich von 350°C bis 400°C oder bis knapp unterhalb von 400°C im ersten Abkühlungsschritt gequencht. Bei einem Quenchen unterhalb dieser Temperaturen sinkt zunehmend der Energieinhalt des Heißdampfes und die zum Quenchen eingesetzten Wärmeübertrager würden zunehmend größer werden.

Zum Quenchen können mehrere Verfahren verwendet werden. Die erste Möglichkeit besteht in der Direktkühlung mit flüssigem Wasser, wobei die Wärme dem Reaktionsgas durch die Verdampfungswärme des verdampfenden Wassers entzogen wird. Ein solcher Quench ist konstruktiv einfach zu verwirklichen. Das zugesetzte Wasser muss in diesem Fall anschließend durch einen Kondensator wieder entfernt werden, da es z.B. in einem nachgeschalteten FT-Prozess nachteilig ist. Eine weitere Möglichkeit besteht in einer Temperaturabsenkung durch Wärmeabfuhr mit einer endothermen Reaktionsführung. Hierfür werden entsprechende Reaktanden dem Gasgemisch zugemischt. Eine dritte Möglichkeit besteht in einem Wärmeübertrager mit einem besonders hohen übertragbaren Wärmestrom, wobei hier die Temperatur des Gasgemisches nach dem Quenchen die Taupunkttemperatur nicht unterschreitet. Die hierbei zu berücksichtigenden konstruktiven Gesichtspunkte sind dem Fachmann bekannt und werden hier nicht weiter ausgeführt.

Bei dem erfindungsgemäßen Verfahren wird dem aufgespaltenen KWS Wasserdampf und Kohlendioxid zugegeben, die beide mit dem erzeugten Kohlenstoff reagieren. Dabei entsteht durch das Kohlendioxid vorwiegend Kohlenmonoxid und durch den Wasserdampf Kohlenmonoxid und Wasserstoff. Diese maßgeblichen Einflussgrößen bilden somit die Basis für das erfindungsgemäße Verfahren, bei dem das Verhältnis der Produkte Wasserstoff und Kohlenmonoxid durch das Zugabeverhältnis von Wasserdampf zu Kohlendioxid geregelt wird. Mit den beschriebenen wesentlichen Reaktionsgleichungen alleine lassen sich allerdings die resultierenden Reaktionsgleichgewichte nur annähernd bestimmen, da zusätzlich eine Reihe von Sekundärreaktionen ablaufen, die zudem noch vom Druck und der Temperatur abhängig sind. Zur Feindosierung der einzelnen Massenströme an Wasserdampf und Kohlendioxid wird daher bevorzugt ein Regelsystem verwendet, bei dem die Gaszusammensetzung am Austritt des Reaktors gemessen wird und in Abhängigkeit davon die einzelnen Massenströme geregelt werden. Das Regelungssystem berücksichtigt dabei auch das Verhältnis der Summe von Wasserdampf und Kohlendioxid zur Menge an zugeführten KWS.

Durch die gezielte Regelung der Einsatzstoffe Kohlendioxid und Wasser und eine optimierte Temperaturführung des Prozesses ist das Verfahren weitgehend unabhängig von der Art der eingesetzten KWS und es wird eine optimale Zusammensetzung des Produktgases, insbesondere mit einem definierten Verhältnis von Wasserstoff zu Kohlendioxid, im Hinblick auf nachfolgende Synthesereaktionen ermöglicht. Die Edukte werden nahezu vollständig umgesetzt. Die Bildung von unerwünschten Nebenprodukten wird minimiert, was die entsprechenden Aufbereitungsschritte vereinfacht und die Wirtschaftlichkeit erhöht.

In der Literatur wird oftmals ein optimales Verhältnis von Wasserstoff zu Kohlenmonoxid von 2 : 1 im Synthesegas zur Herstellung von flüssigen Kohlenwasserstoffen angegeben. Bei diesen Synthesereaktionen erhält man immer ein Gemisch von verschieden langen Kohlenwasserstoffen, die zudem noch funktionelle Gruppen aufweisen können. Bei der Herstellung von KWS, die bevorzugt als Kraftstoffe Verwendung finden sollen, ist die Entstehung von kurzkettigen Verbindungen unerwünscht, da diese für den vorgesehenen Zweck nicht brauchbar bzw. identisch mit den Rohstoffen des Verfahrens sind. Sie müssen in gesonderten Trennoperationen vom Produkt abgetrennt werden und entsprechende Verwendungen finden. Die einfachste Verwendungsmöglichkeit ist dabei die Rückführung in die Synthesegasherstellung. In überraschender Weise wurde gefunden, dass die Entstehung von unerwünschten kurzkettigen KWS wie Methan oder Ethan weitgehend unterbunden wird, wenn das Verhältnis von Wasserstoff zu Kohlenmonoxid im Synthesegas so eingestellt wird, dass es in einem Bereich von 1,5 : 1 bis 2,1 : 1, bevorzugt von 1,75 : 1 bis 1,95 : 1 und besonders bevorzugt von 1,85 : 1 bis 1,90 : 1 eingestellt wird. Die Ursache für dieses Reaktionsverhalten liegt in der kleinen Molekülgröße des Wasserstoffs, wodurch sich eine große Diffusionsgeschwindigkeit ergibt und im FT-Prozess an der Katalysatoroberfläche bevorzugt der Wasserstoff an den Reaktionen teilnimmt. Dadurch wird mikroskopisch gesehen weniger Wasserstoff benötigt als makroskopisch auf Grund der Stöchiometrie notwendig wäre.

Als Plasmagas wird bevorzugt ein Teil des erzeugten Synthesegases verwendet. Infolge der hohen Energiedichte des Gases wird eine vergleichsweise geringe Gasmenge benötigt. Das Stoffmengenverhältnis des zurückgeführten Synthesegases zu beispielweise Methan als KWS liegt in einem Bereich von 5% bis 30% und bevorzugt von 8 % bis 15%.

Beim Anfahren eines Apparates - im weiteren auch als Reaktor bezeichnet - zur Durchführung des Verfahrens wird übergangsweise Wasserstoff verwendet, welches in Druckgasflaschen bereitgestellt wird. Die Verwendung von Edelgas ist ebenfalls möglich, wegen der hohen Kosten jedoch eher weniger bevorzugt. Das Plasmagas muss vor Eintritt in den Reaktor von sämtlichen Bestandteilen, welche schädlich für die Elektrode sind, z.B. Kohlendioxid, gereinigt werden.

Zur Bereitstellung optimaler Reaktionsbedingungen für die endothermen Prozesse im Reaktor werden die Edukte KWS, Kohlendioxid und Wasserdampf vor Eintritt in den Reaktor vorgewärmt bzw. das Wasser zu Wasserdampf verdampft. Für die Vorwärmung kommen grundsätzlich alle Ströme des Verfahrens in Frage, bei denen Wärme abgeführt werden muss, beispielsweise der KWS-Strom aus einem nachfolgenden FT-Prozess, die Quenchzone des Synthesegasreaktors oder das Kühlmittel für die Plasmaelektroden.

Das erzeugte Synthesegas kann nicht nur für Synthesezwecke verwendet werden, sondern auch in bekannter Weise zur Erzeugung von elektrischer Energie genutzt werden. Diese elektrische Energie kann beispielsweise für den Betrieb der Plasmabrenner verwendet werden. Hierfür kann ein Teil der Wärmeenergie des Synthesegases zur Erzeugung von Dampf zum Betrieb von Dampfturbinen genutzt werden oder das Synthesegas kann direkt verbrannt werden zum Betrieb von Gasturbinen.

Die Spaltung von KWS in dem Verfahren zur Erzeugung von Synthesegas wird bevorzugt bei Temperaturen in einem Bereich von 900°C bis 1500°C durchgeführt.

Das Verfahren wird weiterhin bei erhöhten Drücken eingesetzt, was bei Reaktoren zur KWS-Spaltung durch Plasma bisher nicht bekannt ist.

In einer bevorzugten Ausführung des Verfahrens wird der Schritt a) des Anspruchs 1 in einem oder mehreren KWS-Konvertern durchgeführt bei einem Betriebsdruck im Bereich von 1 bara bis 200 bara, bevorzugt im Bereich von 1 bara bis 50 bara und besonders bevorzugt bei Drücken im Bereich von 10 bara bis 25 bara. Bei Betrachtung der maßgeblichen Reaktionsgleichungen (1) bis (4) stellt man fest, dass sich die Molanteile der gasförmigen Reaktionsteilnehmer etwa verdoppeln. Ein hoher Druck also wirkt grundsätzlich dem Ablauf der jeweiligen Hinreaktion entgegen. Die Kohlenwasserstoff-Spaltung in Kvaerner-Reaktoren wird üblicherweise nur bei Drücken von wenigen bar durchgeführt. Bei dem erfindungsgemäßen Verfahren nun werden beide Prozesse bevorzugt in einem gemeinsamen Druckraum durchgeführt, so dass auch die KWS-Spaltung bei erhöhten Drücken durchgeführt wird. Diese Vorgehensweise hat den Vorteil, dass das hergestellte Synthesegas entweder nicht mehr verdichtet werden muss oder nur Verdichter mit kleiner Leistung erforderlich sind für die Einleitung in einen nachgeschalteten FT-Reaktor, wo sich ein hoher Druck vorteilhaft auf die Reaktionsgleichgewichte auswirkt.

Das in dem erfindungsgemäßen Verfahren hergestellte Synthesegas ist durch seine besondere Verfahrensführung auf die Verwendung in einem nachgeschalteten FT-Prozess optimiert. Eine vorteilhafte Anwendung des Verfahrens liegt in der Erzeugung von synthetischen funktionalisierten und/oder nicht-funktionalisierten Kohlenwasserstoffen. Als funktionalisierte Kohlenwasserstoffe werden hier Kohlenwasserstoffe verstanden, welchen mindestens eine funktionelle Gruppe hinzugefügt worden ist.

Bei der Herstellung von funktionalisierten und/oder nicht-funktionalisierten Kohlenwasserstoffen in einem nachgeschalteten FT-Prozess entstehen neben dem oder den Zielprodukten oftmals Nebenprodukte, deren Aufbereitung sich wegen der geringen Menge nicht lohnt oder für die keine wirtschaftliche Verwendung besteht. Diese Stoffe können mit Vorteil als Edukte zum Eingang des KWS-Konverters wieder zurückgeführt werden oder als Brennstoff für Heizapparate zur Vorwärmung der Edukte verwendet werden.

Die Art der nachgeschalteten FT-Prozesse ist nicht besonders eingeschränkt. Das in dem erfindungsgemäßen Verfahren hergestellte Synthesegas kann z.B. verwendet werden in SMDS-Verfahren, Bergius-Pier-Verfahren, Mtl-Verfahren oder in Kombinationen dieser Verfahren.

Das erfindungsgemäße Verfahren ist insbesondere geeignet zur Herstellung von Paraffin, DieselKraftstoffen, Otto-Kraftstoffen, Kerosin, Methanol, Methan oder Flüssiggasen.

Das erfindungsgemäße Verfahren zur Erzeugung von Synthesegas wird bevorzugt in einer Anlage ausgeführt, welche folgendes aufweist:
einen mit Plasma betriebenen Kohlenwasserstoff-Konverter mit wenigstens einem Eingang für ein KWS enthaltendes Fluid sowie wenigstens einem gemeinsamen Ausgang für Kohlenstoff und Wasserstoff;
einen Kohlenstoff-Konverter mit wenigstens einem Eingang für Kohlenstoff und Wasserstoff, wenigstens einem Eingang für Kohlendioxid, wenigstens einem Eingang für Wasser oder Wasserdampf sowie mit wenigstens einem Ausgang für Synthesegas,
wobei der wenigstens eine Eingang für Kohlenstoff und Wasserstoff des Kohlenstoff-Konverters mit einem Ausgang für Kohlenstoff und Wasserstoff des Kohlenwasserstoff-Konverters durch eine Verbindungsleitung verbunden ist,
eine Heizeinrichtung zum Zuführen von Wärme im Schritt b) und
einen Quench zum Quenchen des Produktstroms aus dem Schritt b).

Vorteilhafterweise weist die Anlage ferner eine Regeleinrichtung auf, welche die Zusammensetzung des aus dem C-Konverter strömenden Gasgemisches analysiert und in Abhängigkeit davon die Mengenströme der in den C-Konverter führenden Ströme von Kohlendioxid und Wasser und dabei das Mengenverhältnis von Kohlendioxid zu Wasser so regelt, dass die Zusammensetzung des aus dem C-Konverter strömenden Gases ein Verhältnis der Komponenten von Wasserstoff zu Kohlenmonoxid aufweist, das in einem Bereich von 1,75 : 1 bis 1,95 : 1 liegt. Auf diese Weise ist gewährleistet, dass das aus dem C-Konverter strömende Gas die gewünschte Zusammensetzung aufweist.

Die Anlage zur Erzeugung von Synthesegas verfügt vorzugsweise über einen KWS-Konverter mit einem Plasmabrenner, der als ein Kvaerner-Reaktor ausgeführt ist.

In einer bevorzugten Ausführung werden mindestens zwei der Anlagenteile KWS-Konverter, C-Konverter und Quench zu einem integralen Apparategehäuse zusammengefasst. Somit ergibt sich wenigstens ein Eingang für Kohlenwasserstoff, Plasmagas, Kohlendioxid, Wasserdampf und wenigstens ein Ausgang für das Synthesegas. Der Eingang für Kohlenwasserstoffe und Plasmagas kann alternativ gemeinsam ausgeführt werden.

An die erfindungsgemäße Anlage zur Erzeugung von Synthesegas schließt sich bevorzugt ein Synthesegaskonverter (CO-Konverter) zur Herstellung von synthetischen funktionalisierten und/oder nicht-funktionalisierten Kohlenwasserstoffen an. Dieser kann einen FT-Reakor aufweisen, welcher als SMDS-Konverter, Bergius-Pier- Konverter, Mtl-Konverter oder als eine Kombination von mindestens zwei dieser Konverter ausgeführt ist.

Zur Gewährleistung eines reinen Synthesegases können weitere Reinigungsschritte erforderlich werden, die abhängig von den Eigenschaften der Rohstoffe sind. Die Reinigungsschritte können noch vor Eintritt der Rohstoffe in den Reaktor durchgeführt werden oder nach Austritt des Produktgases aus dem Reaktor.

Das Reaktionsgasgemisch kann grundsätzlich von oben nach unten oder von unten nach oben durch den Reaktor geführt werden. Bevorzugt jedoch ist die Stromführung von oben nach unten, weil das Austragen von eventuellen Ablagerungen durch die Schwerkraft unterstützt wird.

Ein Reaktor zur Durchführung des erfindungsgemäßen Verfahrens weist in einer bevorzugten Ausführung einen zylindrischen Mantel auf, dessen Enden von gewölbten Böden abgeschlossen werden. Der lichte Durchmesser des Reaktors und dessen Länge bemessen sich nach dem Druck, der Temperatur und der Verweilzeit. Je nach axialer Position bzw. je nach Position in Bezug auf die Zugabestellen von Kohlendioxid und Wasserdampf liegt die axiale Strömungsgeschwindigkeit im Reaktor in einem Bereich von 0,05 m/s bis 1,3 m/s.

Zur Vermeidung von Ablagerungen werden Einbauten bevorzugt vermieden oder auf ein Minimum reduziert. Zu den Maßnahmen zur Vermeidung von Ablagerungen gehört auch, dass das Plasmagas in den oberen Teil des Reaktors geführt wird. Ein Plasmabrenner wird dabei bevorzugt so ausgeführt, dass ein ringförmiger Plasmastrahl erzeugt wird, in dessen Zentrum der KWS-Strom geführt wird. Hierdurch wird ein zwangsweiser Kontakt des KWS mit dem Plasmagas erreicht und optimale Bedingungen für eine nahezu vollständige Aufspaltung hergestellt. In dem erzeugten Plasma entsteht eine Spitzentemperatur im Bereich von 2000°C bis 20000°C, die nach Mischung mit dem KWS-Strom in Abhängigkeit vom Mischungsverhältnis auf eine Mischtemperatur im Bereich von 800°C bis 1700°C abfällt.

Die im weiteren Verlauf zuzugebenden Edukte Kohlendioxid und Wasserdampf werden über außerhalb des Reaktors angeordnete Ringleitungen gleichmäßig über den Umfang verteilt. Durch Verbindungsleitungen werden die Edukte auf eine Vielzahl von über den Umfang gleichmäßig verteilten Düsen und durch diese fein in den Innenraum des Reaktors verteilt und so mit dem Hauptstrom vermischt. Die Vermischung kann zusätzlich noch durch statische Mischer verbessert werden. Die ringförmigen Verteilerleitungen können auch als direkt an den Reaktormantel angeschweißte beispielsweise halbkreisförmige Leitungen ausgeführt werden. In einer bevorzugten Ausführungsform sind die in das Reaktorinnere führenden Verteilerdüsen gegen die Hauptströmungsrichtung neigbar und tangential versetzbar zur Erzeugung einer Drallströmung.

Durch die endothermen Reaktionen sinkt im Strömungsverlauf des Reaktors die Temperatur. Die Temperatur des Plasmas ist nicht so hoch, dass die eingetragene Wärmemenge ausreichend ist zur Durchführung aller vorgesehenen Reaktionen. Es ist daher notwendig, dem Reaktor an geeigneten axialen Stellen im Reaktor zusätzlich Wärme zuzuführen. Hierzu werden bevorzugt elektrische Heizungen aus Graphit verwendet. Dieses Material ist temperaturbeständig und korrosionsbeständig. Weiterhin ist die Leistung einer solchen Heizung regelbar, wodurch der Prozess optimal eingestellt werden kann.

Alle Gase, sowohl Edukte als auch Produkte, enthalten Wasserstoff. Entsprechend werden alle Teile, die damit in Berührung kommen, aus wasserstoffbeständigen Werkstoffen ausgeführt. Die betroffenen Teile können entweder aus Vollmaterial des wasserstoffbeständigen Werkstoffs ausgeführt sein oder mit diesem plattiert sein. Wegen der hohen Temperaturen wird der Reaktor an seiner Innenseite mit feuerfestem Material ausgekleidet. Die Dicke der Auskleidung richtet sich nach den lokal herrschenden Temperaturen. Bevorzugt werden Auskleidungsdicken im Bereich von 300 bis 800 mm. Hierdurch kann die Temperatur des Reaktormantels auf relativ niedrige Temperaturen im Bereich von 150°C bis 400°C und bevorzugt in einem Bereich von 180°C bis 250°C begrenzt werden. Da im Betrieb Temperaturen im Reaktorinneren im Bereich von 800°C bis 1700°C herrschen, treten unterschiedliche Wärmedehnungen an unterschiedlichen Stellen des Reaktors auf. Dies wird durch entsprechende konstruktive Maßnahmen berücksichtigt, indem beispielsweise die feuerfeste Auskleidung aus beweglichen Schichten ausgeführt wird. Die Art des feuerfesten Materials ist nicht besonders eingeschränkt, jedoch wird die Verwendung von Graphit bevorzugt, weil dieser Werkstoff hitzebeständig bis ca. 2500°C ist und korrosionsbeständig ist.

Besonders beim Anfahren des Reaktors können innere Spannungen in den Apparateteilen auftreten, die bis zum Bruch führen können. Bevor der Reaktor seinen Betrieb aufnimmt, wird dieser daher vorher kontrolliert mit einer ausreichend geringen Aufheizgeschwindigkeit aufgeheizt. Die Aufheizgeschwindigkeit richtet sich dabei im Wesentlichen nach den Abmessungen und den Werkstoffeigenschaften des Reaktors. In einer bevorzugten Ausführung erhält der Reaktor an seiner Außenseite eine Vielzahl von Heizkanälen, durch die zum Aufheizen ein Wärmeträger geführt wird. Dieselben Heizkanäle können auch zum kontrollierten Abfahren des Reaktors verwendet werden, wenn an diesem Reparatur- oder Wartungsarbeiten durchgeführt werden sollen. In diesem Fall dient der entsprechend temperierte Wärmeträger als Kühlmittel. Bevorzugt wird je nach Betriebsfall Wasserdampf oder Wasser als Wärmeträger verwendet. Zur Vermeidung von Wärmeverlusten wird der Reaktor nach dem Fachmann bekannten Kriterien wärmeisoliert.

Die Erfindung wird anhand von in den Figuren dargestellten Ausführungsbeispielen noch näher erläutert. Hierbei zeigt:
Figur 1: ein Ablaufdiagramm eines Ausführungsbeispiels eines erfindungsgemäßen Verfahrens;
Figur 2: das Ablaufdiagramm aus Figur 1, mit weiteren Verfahrensschritten zur Erzeugung eines Kohlenwasserstoff-Mitteldestillates mit Synthesegas als Zwischenprodukt;
Figur 3: einen Längsschnitt durch eine Ausführungsform einer erfindungsgemäßen Anlage mit Anordnung der einzelnen Anlagenteile in einem integralen Apparategehäuse;
Figur 4: einen Querschnitt durch die Anlage aus Fig. 3 längs Linie IV - IV; und
Figur 5: ein Fließbild einer Ausführungsform einer erfindungsgemäßen Anlage zur Herstellung von Kohlenwasserstoffen.

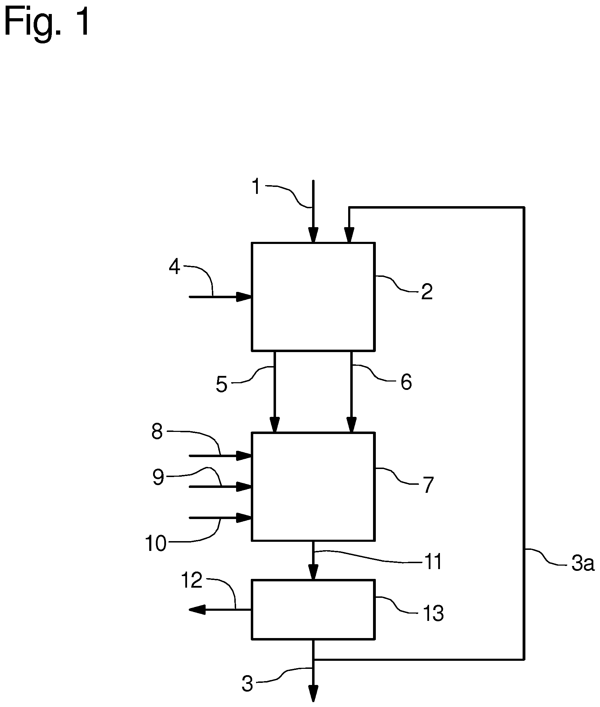

Im Einzelnen zeigt Fig. 1 ein Ausführungsbeispiel eines erfindungsgemäßen Verfahrens zur Erzeugung von Synthesegas in mehreren aufeinander folgenden Schritten. Dabei wird zunächst ein Kohlenwasserstoff (KWS) 1 einem Kohlenwasserstoffkonverter (KWS-Konverter) 2 zugeführt. Gleichzeitig wird ein Teil 3a des in dem Prozess hergestellten Synthesegases 3 in den KWS-Konverter 2 zurückgeführt. Mit Hilfe von elektrischer Energie 4 wird aus dem zurückgeführten Synthesegas 3a ein hier nicht dargestelltes Plasma erzeugt, mit dem der eingeführte KWS 1 zu Kohlenstoff 5 und Wasserstoff 6 aufgespalten wird. Die beiden Spaltprodukte Kohlenstoff 5 und Wasserstoff 6 werden einem Kohlenstoffkonverter (C-Konverter) 7 in separaten Leitungen zugeführt.

Dem C-Konverter 7 werden Wasserdampf 8 und Kohlendioxid 9 zugeführt, wobei die Reihenfolge austauschbar ist; auch eine gleichzeitige Zuführung ist möglich.

In dem in Figur 1 dargestellten Ausführungsbeispiel wird dem C-Konverter 7 zunächst Wasserdampf 8 zugeführt. Dieser wird mit mindestens einem Teil des gewonnenen Produkts 5, 6 aus der KWS-Spaltung im KWS-Konverter 2 mit den Hauptbestandteilen Kohlenstoff 5 und Wasserstoff 6 gemischt. Dabei wird ein Teil des durch die Aufspaltung gewonnenen Kohlenstoffes 5 mit dem Wasserdampf 8 zu Kohlenmonoxid und Wasserstoff umgesetzt, vorzugsweise bei Temperaturen im Bereich von 800°C bis 1700°C. Diesem Teilprozess wird Wärme 10 zugegeben, so dass eine Temperatur des Reaktionsgasgemisches von 800°C nicht unterschritten wird. Weiterhin wird dem C-Konverter 7 Kohlendioxid 9 zugeführt. Dieser wird mit mindestens einem Teil des gewonnenen Produkts 5, 6 aus der KWS-Spaltung im KWS-Konverter 2 mit den Hauptbestandteilen Kohlenstoff 5 und Wasserstoff 6 gemischt. Dabei wird ein Teil des durch die Aufspaltung gewonnenen Kohlenstoffes 5 mit dem Kohlendioxid 9 zu Kohlenmonoxid umgesetzt, vorzugsweise bei Temperaturen im Bereich von 800°C bis 1700°C. Auch diesem Teilprozess wird Wärme 10 zugegeben, so dass eine Temperatur des Reaktionsgasgemisches von 800°C nicht unterschritten wird.

Aus den Produktströmen 11 des C-Konverters 7 wird anschließend Wärme 12 in einem Quench 13 abgeführt, bis eine Temperatur unter 400°C erreicht wird. Die Abkühlgeschwindigkeit wird dabei so hoch gewählt, dass chemische Reaktionen sicher unterbunden werden. Auf diese Weise bleibt die Produktzusammensetzung des aus dem C-Konverter 7 strömenden Produktgases, d. h. Synthesegases 3, erhalten. Von dem aus dem Quench 13 strömenden Synthesegas 3 wird ein Teilstrom 3a abgezogen und als Plasmagas in den Eintritt des KWS-Konverters 2 zurückgeführt.

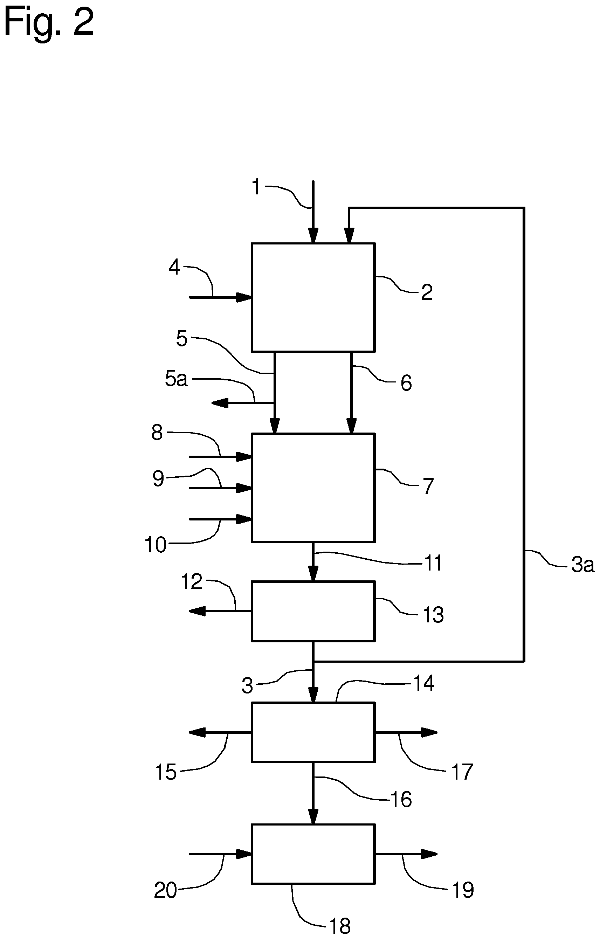

Die Fig. 2 zeigt eine Erweiterung des in Fig. 1 dargestellten Verfahrens. Der erste Teil des Verfahrens von der Zugabe eines KWS 1 in einen KWS-Konverter 2 bis zum Austritt des erzeugten Synthesegases 3 aus einem Quench 13 ist identisch mit dem in Fig. 1 beschriebenen Verfahren bis auf eine Entnahme von Kohlenstoff 5 zwischen dem KWS-Konverter 2 und dem C-Konverter 7. Der entnommene Kohlenstoff 5a wird einer separaten industriellen Verwendung zugeführt. Die Entnahme von Kohlenstoff 5 vergrößert den relativen Anteil von Wasserstoff 6, der dem C-Konverter 7 vom KWS-Konverter 2 zugeführt wird.

Das aus dem Quench 13 strömende Synthesegas 3 wird einem CO-Konverter 14 zugeführt. Dieser ist bevorzugt als Fischer-Tropsch-Konverter ausgeführt. In diesem werden aus wenigstens einem Teil des Synthesegases 3 aus dem vorangegangenen Verfahrensschritt synthetische funktionalisierte und/oder nicht-funktionalisierte Kohlenwasserstoffe erzeugt. Die bei den dabei ablaufenden exothermen Reaktionen entstehende Wärme 15 wird aus dem CO-Konverter 14 abgeführt. Sie kann in anderen Anlagenteilen genutzt werden, beispielsweise im Verfahrensteil zur Erzeugung von Synthesegas 3 zur Vorwärmung der Eduktströme Wasserdampf 8, Kohlendioxid 9 oder des als Plasmagas verwendeten zurückgeführten Synthesegases 3a. Das Produktgas 16 des CO-Konverters 14 enthält im Wesentlichen eine Vielzahl verschiedener KWS und Wasser 17. Dieses Wasser 17 wird in diesem Beispiel noch im CO-Konverter 14 selbst abgeschieden und abgeleitet. Das so erhaltene Gemisch wird in einer Raffinerie 18 unter Zuführung von Wärme 20 in verschiedene Fraktionen von KWS mit unterschiedlichen mittleren Siedepunkten aufgetrennt. Von besonderem Interesse ist dabei das abgeführte Mitteldestillat 19, dessen Zusammensetzung und Mengenanteil von der Zusammensetzung des zugeführten Synthesegases 3 und der Prozessführung im CO-Konverter 14 abhängt. Die vom Mitteldestillat 19 abgetrennten KWS können - hier nicht gezeigt - als Edukte in den KWS-Konverter 2 der Synthesegasherstellung wieder zurückgeführt werden. Hierdurch werden Rohstoffe eingespart, und das Problem der Abfallentsorgung wird gelöst.

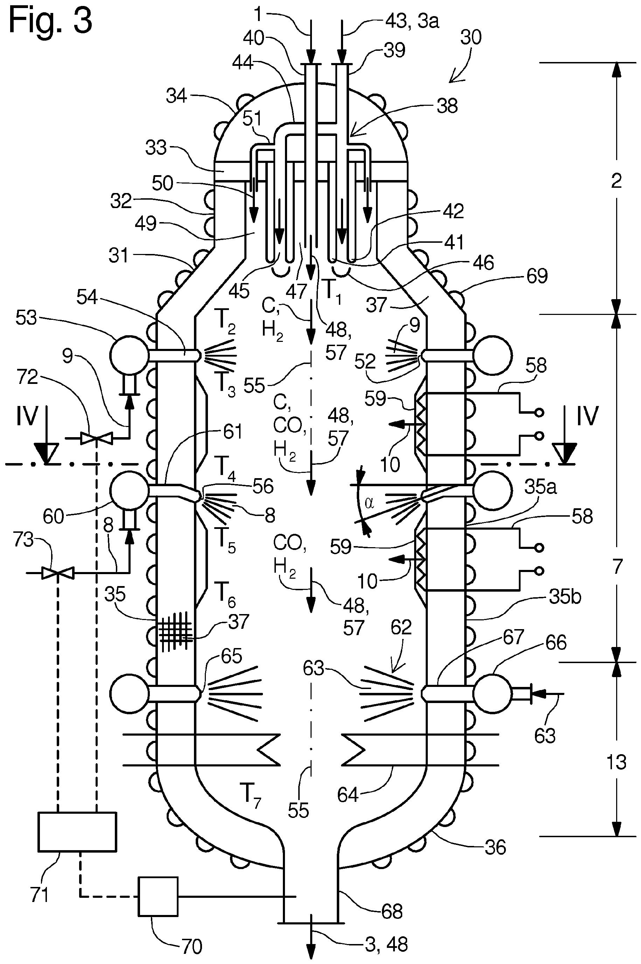

Fig. 3 zeigt beispielhaft eine Ausführung, bei der KWS-Konverter 2, C-Konverter 7 und Quench 13 in dieser Reihenfolge von oben nach unten in einem gemeinsamen Apparat bzw. Reaktor 30 angeordnet sind.

Der KWS-Konverter 2 weist einen konischen Mantel 31, einen (oberen) zylindrischen Mantel 32, eine Elektrodenhalterung 33 und eine oberen Haube 34 auf, welche die Elektrodenhalterung 33 überspannt. Der konische Mantel 31 verjüngt sich nach oben. An seinem unteren, breiten Ende ist er mit dem oberen Ende eines unteren zylindrischen Mantels 35 verbunden, der sich nach unten erstreckt und zunächst einen Mantel 35a des C-Konverters 7 und dann einen Mantel 35b des Quenchs 13 bildet. Den unteren Abschluss des gemeinsamen Reaktors 30 bildet eine untere Haube 36, die mit dem unteren Ende des unteren zylindrischen Mantels 35 verbunden ist.

Der konische Mantel 31 und die zylindrischen Mäntel 32, 35 sowie die untere Haube 36 des gemeinsamen Reaktors 30 sind zum Schutz vor den hohen Temperaturen mit einer inneren Feuerfestauskleidung 37 geschützt. Für die Feuerfestauskleidung 37 kommen üblicherweise Werkstoffe, z. B. auf Steinbasis oder Keramikbasis, zur Ausführung. Als besonders bevorzugter Werkstoff wird jedoch mindestens teilweise Graphit verwendet.

Der konische Mantel 31 des KWS-Konverters 2 ist an seinem oberen, verjüngten Ende mit dem unteren Ende des zylindrischen Mantels 32 des KWS-Konverters 2 verbunden. An dem oberen Ende dieses Mantels 32 ist die Elektrodenhalterung 33 befestigt.

An der Elektrodenhalterung 33 ist ein Plasmagenerator 38 befestigt, welcher von mehreren Zuleitungen 39, 40 gespeist wird. Der Plasmagenerator 38 weist eine innere und eine äußere Ringelektrode 41, 42 auf, die voneinander elektrisch isoliert konzentrisch angeordnet an der Elektrodenhalterung 33 befestigt sind und sich vertikal bis ungefähr zum unteren Ende des zylindrischen Mantels 32 des KWS-Konverters 2 erstrecken. Die Elektrodenhalterung 33 ist bevorzugt als ebene Platte ausgeführt. Dies erleichtert die Montage der daran angeschlossenen Teile. Das Plasmagas 43 wird über eine Plasmagaszuleitung 39 durch die obere Haube 34 und durch einen Verteiler 44 gleichmäßig in den Ringraum 45 zwischen innerer Ringelektrode 41 und äußerer Ringelektrode 42 verteilt. Am unteren Ende der Ringelektroden 41, 42 kommt es zu einer elektrischen Entladung, wodurch sich ein Plasmabogen 46 ausbildet, in dem aus dem zugeführten Plasmagas 43 ein Plasma erzeugt wird. Übliche Plasmagase sind Edelgase oder Wasserstoff. Diese Gase sind jedoch recht teuer und werden daher in der Regel nur zum Anfahren des Reaktors 30 verwendet. Für den stationären Betrieb wird bevorzugt ein kleiner Teil 3a des im Reaktor 30 erzeugten Synthesegases 3 in den Eintritt des KWS-Konverters 2 als Plasmagas 43 zurückgeführt.

Der zu spaltende KWS 1 wird über eine zentrale Leitung 40 in den Innenraum 47 der inneren Ringelektrode 41 des Plasmagenerators 38 zugeführt. Diese zentrale Leitung 40 ist in bekannter Weise ausgeführt und kann beispielsweise auch in hier nicht gezeigter Weise axial verschoben werden, um optimale Bedingungen für die Spaltungsreaktion zu erhalten.

Sowohl die zentrale Leitung 40 als auch die Ringelektroden 41, 42 können durch integrierte Kühlkanäle gekühlt werden. Bevorzugt jedoch werden die Wände sowohl von zentraler Leitung 40 als auch von den Ringelektroden 41, 42 massiv ausgeführt.

Nach Vermischung des KWS-Stroms 1 mit dem Plasmagas 43 hat das Reaktionsgas 48 eine Temperatur von T₁, welche in einem Bereich von 900°C bis 1700°C liegt.

Zwischen der äußeren Ringelektrode 42 und der Feuerfestauskleidung 37 ist ein Sicherheitsabstand vorhanden, wodurch ein äußerer Ringraum 49 entsteht. Um Rückströmungen des Plasmagases 43 mit eventuellen Kohlenstoffablagerungen in diesen äußeren Ringraum 49 zu minimieren, kann dieser mit einem Schutzgas 50 gespült werden. Als Schutzgas 50 kann ein Edelgas oder auch Wasserstoff verwendet werden. Wie in Fig. 3 dargestellt, wird jedoch bevorzugt von dem in den KWS-Konverter 2 eingeführten Plasmagas 43 ein kleiner Teil entnommen und durch eine oder mehrere Schutzgasleitungen 51 in den äußeren Ringraum 49 geführt.

Der KWS-Konverter 2 geht mit dem konischen Mantel 31 bzw. Übergangsteil in den C-Konverter 7 über. Durch die Querschnittserweiterung ergibt sich eine Verzögerung der Strömungsgeschwindigkeit und entsprechend eine Erhöhung der Verweilzeit.

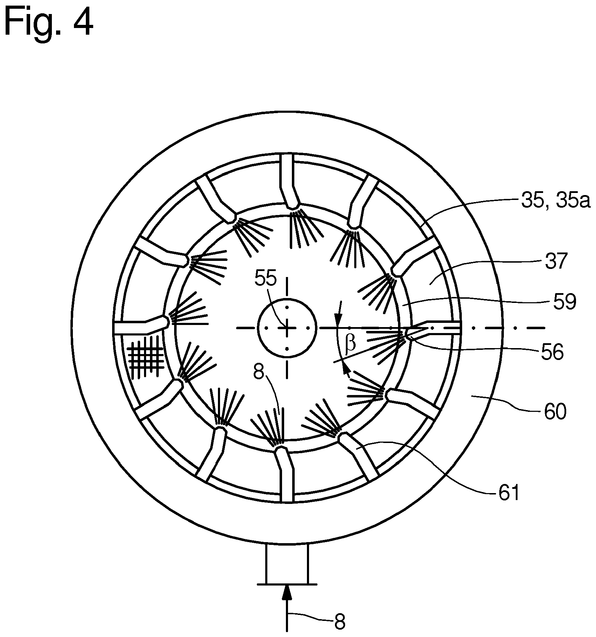

Bei der wärmeaufnehmenden Spaltungsreaktion, bei der der KWS 1 weitgehend in Kohlenstoff 5 und Wasserstoff 6 aufgespalten wird, sinkt die Temperatur auf einen Wert von T₂ ab. Nun wird nahe dem Eintritt des Kohlenstoffkonverters (C-Konverter) 7 vorgewärmtes Kohlendioxid 9 durch eine Vielzahl von über den Umfang des C-Konverters 7 verteilten Verteilerdüsen 52 zugegeben. Hierfür wird das Kohlendioxidgas 9 zunächst in einen Ringverteiler 53 geführt, welcher in der Art eines Torus um den C-Konverter 7 herum geführt ist. Von diesem zweigen mehrere Verteilerleitungen 54 durch den unteren zylindrischen Mantel 35 hindurch zu den in das C-Konverterinnere zeigenden Verteilerdüsen 52 ab. Die Verteilerdüsen 52 können direkt zur C-Konverter- bzw. Reaktorachse 55 zeigen. In einer bevorzugten Ausführungsform sind diese jedoch (ähnlich wie weiter unten erwähnte Verteilerdüsen 56 für Wasser oder Wasserdampf) gegen die Reaktorachse 55 mit einem Winkel **α** geneigt angeordnet, wobei der Neigungswinkel im Bereich von 0° bis 35° und bevorzugt im Bereich von 0° bis 20° liegt. In einer weiteren bevorzugten Ausführungsform sind die Verteilerdüsen 52, wie in Fig. 4 gezeigt, noch azentrisch zur Apparateachse 55 mit einem Winkel **β** im Bereich von 0° bis 30° und bevorzugt mit einem Winkel im Bereich von 0° bis 15° angeordnet. Die Verteilerdüsen 52, 56, 65, ragen nur minimal in das Innere des Reaktors hinein, um Ablagerungen, Strömungsbeeinflussungen und/oder Abrasion zu mimimieren. Die in das Innere des Reaktors ragende Länge beträgt 0 bis 50 mm. Bevorzugt schließen die Verteilerdüsen bündig mit der Innenwand ab.

Das aus den Verteilerdüsen 52 strömende Gas 9 hat eine deutlich höhere Geschwindigkeit als der längs der Reaktorachse 55 strömende Hauptgasstrom 57. Die Geschwindigkeit des Hauptgasstroms 57 liegt in einem Bereich von 0,05 bis 1,3 m/s, bevorzugt von 0,1 m/s bis 0,7 m/s. Die Geschwindigkeit der Verteilerdüsenströme liegt in einem Bereich von 0,8 m/s bis 10 m/s. Durch die deutliche höhere Geschwindigkeit der Verteilerdüsenströme im Vergleich zur Geschwindigkeit des Hauptgasstroms 57 kann auf zusätzliche Mischeinrichtungen verzichtet werden. Die Anzahl der über den Umfang verteilten Verteilerdüsen 52 richtet sich nach dem lichten Durchmesser des C-Konverters 7. Der Abstand der Verteilerdüsen 52 zueinander in Umfangsrichtung liegt dabei im Bereich von 30 bis 200 mm. Er ist auch abhängig von dem überstrichenen Winkel des austretenden Gases 9. Die Verteilerdüsen 52 können auch - hier nicht dargestellt - in zwei axial beabstandeten Ebenen angeordnet werden, wobei die Verteilerdüsen 52 in Hauptströmungsrichtung zueinander versetzt angeordnet sind. Der axiale Abstand der mit Verteilerdüsen 52 besetzten Ebenen liegt bevorzugt in einem Bereich von 20 bis 200 mm. Je nach Temperatur und Menge des zugegebenen Kohlendioxids 8 hat das Reaktionsgas 48 nun eine Temperatur von T₃.

Um optimale Bedingungen für die nachfolgende endotherme Boudouard-Reaktion zu schaffen, wird dem Reaktionsgas 48 Wärme 10 durch eine elektrische Heizung 58 zugeführt. Der Heizkörper 59 ist vorzugsweise aus Graphit ausgeführt. Die Wärme 10 wird in erster Linie durch Wärmestrahlung, in zweiter Linie durch Konvektion zugeführt. Nach diesem Reaktionsschritt hat das Reaktionsgas die Temperatur T₄. An dieser Stelle enthält das Reaktionsgas 48 im Wesentlichen Kohlenmonoxid, Wasserstoff, nicht umgesetzten Kohlenstoff sowie geringe Anteile an nicht umgesetzten Kohlendioxid und eventuell noch geringe Mengen an Methan.

In einer zweiten Zugabestation wird dem Reaktionsgas 48 Wasserdampf 8 als Sattdampf oder bevorzugt als überhitzter Wasserdampf durch Verteilerdüsen 56 dem Hauptgasstrom 57 zugegeben. Die Zugabevorrichtung ist mit Ringleitung 60, Verteilerleitungen 61 und Verteilerdüsen 56 ähnlich gestaltet wie die zuvor beschriebene zur Zugabe von Kohlendioxid 9. Nach Mischung des Hauptgasstroms 57 mit dem Wasserdampf 8 hat das Reaktionsgasgemisch die Temperatur T₅.

Zur Bereitstellung optimaler Reaktionsbedingungen für die nachfolgende endotherme heterogene WGS-Reaktion wird dem Reaktionsgasgemisch Wärme durch eine weitere elektrische Heizung 58 zugeführt, die ähnlich gestaltet ist wie die vorgenannte nach der Zugabe von Kohlendioxid 9. Nach diesem Reaktionsschritt hat das Reaktionsgas die Temperatur T₆. An dieser Stelle enthält das Reaktionsgas im Wesentlichen Kohlenmonoxid und Wasserstoff.

Nach Beendigung der Reaktionen wird das Reaktionsgasgemisch 48 gequencht. Dies geschieht entweder durch eine Direktkühlung 62 durch Einspritzen von flüssigem Wasser 63 oder alternativ oder in Kombination mit einem Quench-Wärmeübertrager 64. Zur Durchführung der Direktkühlung weist der Quench 13 eine Einspritzvorrichtung 65, 66, 67 auf, die ähnlich wie die Zugabevorrichtung 56, 60, 61 für Wasser 8 des C-Konverters 7 ausgebildet ist. Von einer Ringleitung 66, die um den Quench 13 herumgeführt ist, zweigen mehrere Verteilerleitungen 67 durch den unteren zylindrischen Mantel 35 hindurch zu Verteilerdüsen 65 ab, die zum Inneren des Quench 13 hin gerichtet sind.

Der Quench-Wärmeübertrager 64 ist im dargestellten Ausführungsbeispiel stromabwärts der Direktkühlung 62 angeordnet.

Nach dem Quenchen hat das Reaktionsgasgemisch 48 eine Temperatur T₇ gleich oder kleiner 400°C, bei der keine weiteren Reaktionen mehr ablaufen. Das Synthesegas 3, 48 enthält nun im Wesentlichen Kohlenmonoxid und Wasserstoff. Die untere Haube 36 weist in ihrem Scheitelbereich einen Austrittsstutzen 68 auf, aus dem das Synthesegas 3, 48 und gegebenenfalls Wasser austritt.

Das Synthesegas 3, 48 wird einem an sich bekannten CO-Konverter 14, im Speziellen einem Fischer-Tropsch-Konverter zur Herstellung von die funktionalisierten und/ oder nicht-funktionalisierten Kohlenwasserstoffe, zugeleitet, welcher hier nicht weiter dargestellt ist.

Der Reaktor 30 ist weiterhin mit Heiz- bzw. Kühlkanälen 69 ausgestattet zum kontrollierten Aufheizen bzw. Abkühlen des Reaktors 30. Der hierbei verwendete Wärmeträger ist bevorzugt flüssiges oder gasförmiges Wasser, jedoch können auch andere geeignete Wärmeträger verwendet werden wie z.B. Thermalöle.

Am Ausgang des Reaktors 30 befindet sich ein Analysegerät 70, mit dem die Gaszusammensetzung des Produktgases 48, d. h. des Synthesegases 3, analysiert wird. Die Analyseergebnisse werden an einen Regler 71 weitergeleitet, welcher das Verhältnis der Zugabemengen von Kohlendioxid 9 und Wasserdampf 8 in den C-Konverter 7 durch ein Regelventil 72 für Kohlendioxid 9 und ein Regelventil 73 für Wasserdampf 8 regelt. Hierbei wird auch das Verhältnis der Summe von Kohlendioxid 9 und Wasserdampf 8 zum zugeführten KWS 1 berücksichtigt.

Sämtliche Einzelteile des Reaktors 30 sind auf den Innendruck ausgelegt, welcher in einem Bereich von 2 bis 50 bara und bevorzugt in einem Bereich von 10 bis 25 bara liegt. Da durch den Reaktor 30 wasserstoffhaltige Gase geführt werden, sind zumindest alle davon berührten Teile aus wasserstoffbeständigen Werkstoffen ausgeführt. Bevorzugt wird wasserstoffbeständiger Edelstahl verwendet. Dieser kann auf einem Grundwerkstoff aufplattiert sein, oder die Reaktorwände 31, 32, 34, 35, 36 als auch die Elektrodenhalterung 33 werden vollständig aus diesem Werkstoff ausgeführt. Aus Gründen der Übersichtlichkeit sind weitere Ausstattungsmerkmale des Reaktors 30 nicht dargestellt, welche zur üblichen weiteren Konstruktion gehören, wie z.B. die Auflagerung, die thermische Isolierung, der Potentialausgleich, Stutzen für Wartung und Messinstrumente, Anschlüsse für den Wärmeträger, Plattformen zur Inspektion oder die Elektroinstallation.

Fig. 4 zeigt einen Querschnitt durch den in Fig. 3 dargestellten Reaktor 30. Gezeigt ist hier die azentrische Anordnung der Einspritzdüsen bzw. Verteilerdüsen 56 für Wasserdampf 8. Die Einspritzdüsen 56 sind gegen eine radial, d. h. durch die Reaktorachse 55, verlaufende Gerade um den Winkel β versetzt angeordnet. Weiterhin sind der den Reaktor umgebende Ringverteiler 60 sowie die von ihm abzweigenden Verteilerleitungen 61 gezeigt.

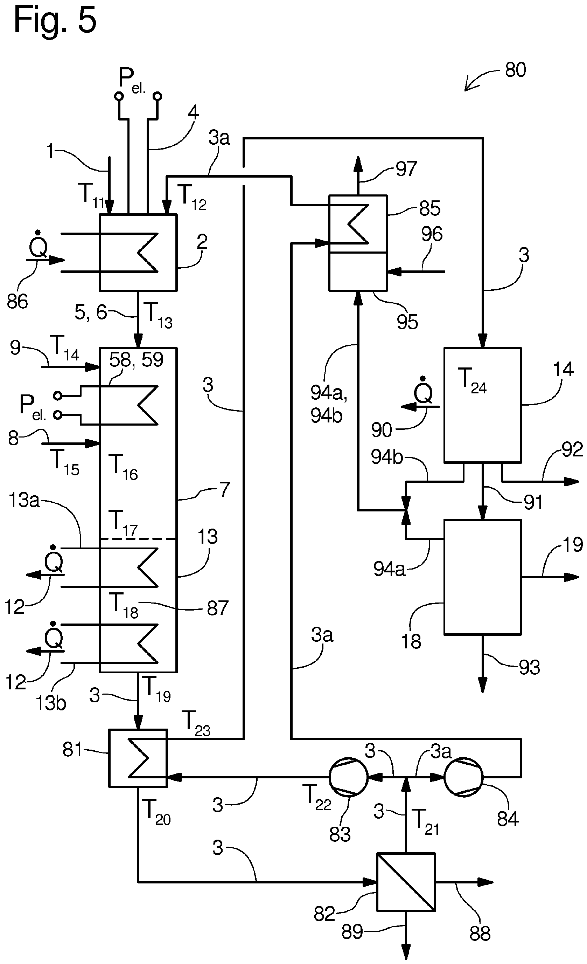

Ein Fließbild für eine Gesamtanlage 80 zur Herstellung von flüssigen Kohlenwasserstoffen unter Verwendung der erfindungsgemäßen Maßnahmen ist in Fig. 5 dargestellt. Zu dieser Gesamtanlage 80 gehört ein KWS-Konverter 2 und ein C-Konverter 7 mit einem Eintritt für das Produktgas 5, 6 aus dem KWS-Konverter 2, einem Eintritt für Kohlendioxid 9, einem Eintritt für Wasserdampf 8 und einem Austritt für das hergestellte Synthesegas 3. Im stromabwärtigen Bereich des C-Konverters 7 befindet sich ein mehrteiliger Quench 13, dessen einzelne Wärmeträgerkreisläufe unterschiedliche Anlagenteile mit Wärme versorgen. Nach Austritt aus dem Quench 13 des C-Konverters 7 wird das Synthesegas 3 nach Durchgang durch einen Kühler 81 zunächst in eine Reinigungsstufe 82 geführt. Der Hauptteil des gereinigten Synthesegases 3 wird anschließend über einen Hochdruckverdichter 83 durch den vorgenannten Kühler 81 geführt, wo er das aus dem C-Konverter 7 strömende Synthesegas 3 kühlt und sich dabei aufheizt. Das Synthesegas 3 wird anschließend einem CO-Konverter 14 zugeführt, der hier als FT-Reaktor ausgeführt ist. Ein kleiner Teilstrom 3a des aus der Reinigungsstufe 82 kommenden Synthesegases 3 wird mit einem anderen Verdichter 84 über einen Aufheizer 85 zur Verwendung als Plasmagas zurück in den KWS-Konverter 2 geführt.

Die Parameter der einzelnen Anlagenteile bzw. Verfahrensstufen werden im Folgenden an einem Beispiel näher erläutert. Dem bei einem Druck von 20 bara betriebenen KWS-Konverter 2 wird ein Molenstrom an Methan als KWS 1 von 1,0 kmol/s entsprechend 16 kg/s zugeführt. Der Plasmabrenner bzw. -generator erhält einen Massenstrom von 1,07 kg/s an zurückgeführtem Synthesegas 3a. Beide Massenströme werden separat vor Eintritt in den KWS-Konverter 2 auf eine Eintrittstemperatur T₁₁ und T₁₂ von 450°C vorgewärmt. Für die Spaltung des Methans ist entsprechend Reaktionsgleichung (1) bei einem Umsatzgrad von rund 97% eine Reaktionsenergie 4 von 72,5 MW erforderlich. Zum Aufheizen 86 des Reaktionsgasgemisches auf eine Temperatur T₁₃ von 1600°C bis zum Austritt des KWS-Konverters 2 werden unter Berücksichtigung von Wärmeverlusten weitere 119,5 MW benötigt, so dass der Gesamtenergiebedarf für den KWS-Konverter 192 MW beträgt. Dies entspricht einem spezifischen Energieaufwand von 4,6 kWh/kgC, bezogen auf den gesamten C-Anteil im Reaktionsgasgemisch.

Im zweiten Teil des Reaktors, dem C-Konverter 7, wird der Kohlenstoff 5 umgesetzt. Dazu werden zunächst 17,7 kg/s Kohlendioxid (CO₂) 9 und 12,7 kg/s Wasserdampf (H₂O) 8 dem Prozess zugeführt. Das Kohlendioxid 9, welches hier aus einem Kraftwerk stammt, hat nach der Verdichtung auf den Prozessdruck von 20 bara eine Temperatur T₁₄ von 414 °C. Der Wasserdampf 8 wird vorab auf eine Temperatur T₁₅ von 400°C überhitzt und anschließend weiter stromabwärts in den C-Konverter 7 eingedüst. Die Vermischung des Produktgases 5, 6 aus dem KWS-Konverter 2 mit den beiden Eduktströmen aus Kohlendioxid 9 und Wasserdampf 8 ergibt eine Mischtemperatur T₁₆ von 1122°C.

Sowohl die Boudouard- als auch die heterogene WGS-Reaktion sind endotherm. Ausgehend von einem kompletten Umsatz des Kohlenstoffes ergibt sich eine erforderliche Reaktionswärme von 140,6 MW. Diese wird zum Teil durch eine Wärmeabgabe des Reaktionsgasgemisches bereitgestellt. Zur Gewährleistung eines maximalen Kohlenstoffumsatzes wird eine Absenkung auf eine minimale Temperatur T₁₇ von 1000°C zugelassen. Der Temperaturunterschied von 122°C entspricht einer sensiblen Wärme von 15,8 MW. Unter "sensibler Wärme" wird die Wärmeänderung verstanden, bei der keine Phasenänderung stattfindet. Die für die vollständige Kohlenstoffkonvertierung erforderliche restliche Reaktionswärme von 124,8 MW wird dem Prozess durch einen elektrisch betriebenen Graphitheizer 58, 59 zugeführt. Nach Abschluss der Kohlenstoffumsetzungen wird der Produktgasmassenstrom von 47,5 kg/s durch mehrere im C-Konverter 7 befindliche Quenchstufen 13a, 13b konvektiv bis auf eine Temperatur T₁₉ von 215°C abgekühlt, wobei ein Temperaturschnitt 87 zwischen zwei Quenchstufen 13a, 13b bei einer Temperatur T₁₈ von 301 °C liegt. Bis zu dieser Temperaturstufe 87 ist die Abkühlgeschwindigkeit so groß, dass Rückreaktionen im bei 1000°C vorliegenden Reaktionsgasgemisch weitgehend unterbunden werden.

Dieses Produkt- bzw. Synthesegas 3 wird in dem Kühler 81 auf eine Temperatur T₂₀ von 136°C gekühlt und anschließend der Reinigungsstufe 82 zugeführt. Das daraus austretende gereinigte Synthesegas 3 mit einem Massenstrom von 38,2 kg/s hat die Zusammensetzung

| | |
|---|---|
| CO | 32,0 Vol-% |
| CO₂ | 1,8 Vol-% |
| H₂ | 64,0 Vol-% |
| H₂O | 1,5 Vol-% |
| CH₄ | 0,7 Vol-% |

Nach der Reinigungsstufe 82 hat das Synthesegas 3 eine Temperatur T₂₁ von ca. 20°C bei einem Druck von 20 bara. In der Reinigungsstufe 82 wird Wasser 88 abgeschieden. Andere, energiehaltige Anteile 89 werden in anderen Anlagenteilen energetisch weiter genutzt. Von dem Synthesegas 3 wird ein Teilstrom 3a von 1,07 kg/s wie eingangs beschrieben zum Plasmagenerator 38 des KWS-Konverters 2 zurückgeführt. Der Druck des Hauptteils des Synthesegases 3 wird mit dem Hochdruckverdichter 83 von 20 bara auf 40 bara erhöht. Dabei findet eine Erhöhung der Temperatur T₂₂ auf 96°C statt. In dem vorbeschriebenen Kühler 81 für das aus dem C-Konverter 7 austretende Reaktionsgasgemisch bzw. Synthesegas 3 dient es als Kühlmittel, wobei seine Temperatur T₂₃ auf 190°C erhöht wird.

Für einen speziellen Prozess in einem nachfolgenden Fischer-Tropsch-(FT-)Reakor 14 wird ein Verhältnis von H₂ zu CO von 2 : 1 benötigt, wie es hier erreicht worden ist. Bei dieser Fischer-Tropsch-Synthese werden 158 kJ/mol an Reaktionswärme 90 frei bei einem Temperaturniveau T₂₄ von etwa 200°C. Diese Wärme kann wiederum in den Prozess eingebracht werden bzw. im Abwärmemanagement zur Erzeugung von elektrischer Energie Verwendung finden. Auf die oben bezogenen Massenströme ergibt sich eine Wärmemenge von 172,3 MW. Um einen entsprechenden Umsatz im Fischer-Tropsch-Prozess von hier 90% zu erreichen, werden mehrere Anlagen in Reihe geschaltet. Anschließend werden die erzeugten KWS 91 in einer Raffinerie 18 zu Treibstoff bzw. Flüssiggas usw. aufgetrennt. Hierbei wird ein Mitteldestillat 19 erzeugt mit einer Zusammensetzung von ca. 50% Kerosin, 25% Naphtha und 25% Diesel. Daraus ergeben sich die nutzbaren Massenströme

| | |
|---|---|
| Kerosin: | 6,7 kg/s |
| Diesel: | 3,3 kg/s |
| Naphta: | 3,3 kg/s |
| Propan usw. | 0,7 kg/s |

Aus dem FT-Reaktor wird weiterhin entstandenes Wasser 92 abgeführt.
Wie bereits in Verbindung mit Figur 2 erwähnt, können die in der Raffinerie 18 vom Mitteldestillat 19 abgetrennten KWS 93 teilweise als Edukte in den KWS-Konverter 2 wieder zurückgeführt werden.

Bei dieser speziellen Anlage wird das in der Raffinerie 18 anfallende Propan 94a als auch die im FT-Reaktor 14 anfallenden geringen Mengen an Propan 94b einem Brenner 95 zugeführt, in dem es mit Luftsauerstoff 96 verbrannt wird. Die Verbrennungswärme wird in dem Aufheizer 85 an den Teilstrom 3a an Synthesegas 3 abgegeben, welches als Plasmagas im KWS-Konverter 2 verwendet wird und dort mit einer Temperatur von 450°C eintritt. Das in dem Brenner entstehende Abgas wird über eine Abgasleitung 97 abgeführt.

Energetisch gesehen werden 800,2 MW an Methan, insgesamt 277,7 MW an Strom sowie 26,0 MW für die Gasreinigung eingesetzt und man erhält 305,7 MW an Kerosin, 149,7 MW Diesel, 150,0 MW Naphta und 147,9 MW an Propan. Setzt man den Nutzen ins Verhältnis zum Aufwand und berücksichtigt einen Umwandlungsgrad von 60% im Kraftwerk für die Umwandlung der chemischen Energie von Methan zu elektrischer Energie, so ergibt sich ein auf die chemischen Energien bezogener Wirkungsgrad von 58,4 %.

## Patentansprüche

1. Verfahren zur Erzeugung von Synthesegas, welches folgende Schritte aufweist:
a) Aufspalten eines Kohlenwasserstoffes (1) zu Kohlenstoff (5) und Wasserstoff (6) mit Hilfe eines Plasmas,
b) Mischen von Wasserdampf (8) und Kohlendioxid (9) mit mindestens einem Teil des gewonnenen Produkts aus a) mit den Hauptbestandteilen Kohlenstoff (5) und Wasserstoff (6), wobei ein Teil des durch die Aufspaltung gewonnenen Kohlenstoffes (5) in einer endothermen Reaktion mit dem Wasserdampf (8) zu Kohlenmonoxid und Wasserstoff umgesetzt wird, vorzugsweise bei Temperaturen im Bereich von 800°C bis 1700°C, und ein Teil des durch die Aufspaltung gewonnenen Kohlenstoffes (5) in einer anderen endothermen Reaktion mit dem Kohlendioxid (9) zu Kohlenmonoxid umgesetzt wird, vorzugsweise bei Temperaturen im Bereich von 800°C bis 1700°C, und wobei den endothermen Reaktionen Wärme zugeführt wird, um einen maximalen Umsatz von Kohlenstoff (5) zu gewährleisten, und
c) Quenchen (13) des Produktstroms aus dem Schritt b).

2. Verfahren nach Anspruch 1, wobei im Schritt b) das Zumischen von Kohlendioxid (9) vor dem Zumischen von Wasserdampf (8) erfolgt.

3. Verfahren nach Anspruch 1 oder 2, wobei im Schritt b) die Zufuhr der Wärme (10) durch elektrische Beheizung und/oder durch Mitverbrennung von Kohlenwasserstoffen erfolgt.

4. Verfahren nach einem der vorhergehenden Ansprüche, wobei im Schritt c) der Produktstrom auf eine Temperatur von 400°C oder unter 400°C gequencht wird.

5. Verfahren nach einem der vorhergehenden Ansprüche, wobei das Quenchen (13) gemäß Schritt c) durch das Eindüsen von Wasser (63), durch Wärmeabfuhr mit einer endothermen Reaktionsführung oder durch Wärmeübergang in einem Wärmeübertrager (64) erfolgt, wobei in letzterem Fall die Temperatur des Gasgemisches nach dem Quenchen (13) die Taupunkttemperatur nicht unterschreitet.

6. Verfahren nach einem der vorhergehenden Ansprüche, wobei das Verhältnis der Produkte Wasserstoff zu Kohlenmonoxid durch das Zugabeverhältnis von Wasserdampf (8) zu Kohlendioxid (9) geregelt wird.

7. Verfahren nach Anspruch 6, wobei ein Verhältnis von Wasserstoff zu Kohlenmonoxid in einem Bereich von 1,75:1 bis 1,95:1 eingestellt wird.

8. Verfahren nach einem der vorhergehenden Ansprüche, wobei im Schritt b) die Temperaturen in einem Bereich von 900°C bis 1500°C liegen.

9. Verfahren nach einem der vorhergehenden Ansprüche, wobei der Schritt a) in einem oder mehreren Kohlenwasserstoffkonvertern (2) mit einem Betriebsdruck im Bereich von 1 bar bis 50 bar durchgeführt wird.

10. Verfahren nach einem der vorangehenden Ansprüche, wobei Anspruch 1 einen weiteren Schritt d) aufweist:
d) Erzeugen von synthetischen funktionalisierten und/oder nicht-funktionalisierten Kohlenwasserstoffen (91, 19) aus wenigstens einem Teil des Synthesegases (3), das im Schritt c) des Verfahrens nach Anspruch 1 gebildet wurde.

11. Verfahren nach Anspruch 1 oder 2, wobei im Schritt b) die Zufuhr der Wärme durch Zugabe von vorgewärmtem Kohlendioxid und/oder Wasser erfolgt.

12. Anlage zur Durchführung eines Verfahrens gemäß einem der Ansprüche 1-11, welche folgendes aufweist:
einen mit Plasma betriebenen Kohlenwasserstoffkonverter (2) mit wenigstens einem Eingang für ein Kohlenwasserstoff (1) enthaltendes Fluid sowie wenigstens einem gemeinsamen Ausgang für Kohlenstoff (5) und Wasserstoff (6);
einen C-Konverter (= Kohlenstoff-Konverter) (7) mit wenigstens einem Eingang für Kohlenstoff (5) und Wasserstoff (6), wenigstens einem Eingang für Wasser (8) und wenigstens einem Eingang für Kohlendioxid (9) sowie mit wenigstens einem Ausgang für Synthesegas (3),
wobei der wenigstens eine Eingang für Kohlenstoff (5) und Wasserstoff (6) des C-Konverters (7) mit einem Ausgang für Kohlenstoff (5) und Wasserstoff (6) des Kohlenwasserstoffkonverters (2) durch eine Verbindungsleitung verbunden ist,
eine Heizeinrichtung zum Zuführen von Wärme im Schritt b) und
einen Quench (13) zum Quenchen des Produktstroms aus dem Schritt b).

13. Anlage nach Anspruch 12, ferner mit einer Regeleinrichtung (71), welche die Zusammensetzung des aus dem C-Konverter (7) strömenden Gasgemisches (3, 48) analysiert und in Abhängigkeit davon die Mengenströme der in den C-Konverter (7) führenden Ströme von Kohlendioxid (9) und Wasser (8) und dabei das Mengenverhältnis von Kohlendioxid (9) zu Wasser (8) so regelt, dass die Zusammensetzung des aus dem C-Konverter (7) strömenden Gases (3, 48) ein Verhältnis der Komponenten von Wasserstoff zu Kohlenmonoxid aufweist, das in einem Bereich von 1,75:1 bis 1,95:1 liegt.

14. Anlage gemäß Anspruch 12 oder 13, wobei mindestens zwei der Anlagenteile Kohlenwasserstoffkonverter (2), C-Konverter (7) und Quench (13) in einem integralen Apparategehäuse (30) angeordnet sind.

15. Anlage zur Erzeugung von synthetischen funktionalisierten und/oder nicht-funktionalisierten Kohlenwasserstoffen, mit einer Anlage nach einem der Ansprüche 12 bis 14, die weiterhin mindestens einen CO-Konverter (14) aufweist, wobei dieser einen Fischer-Tropsch-Konverter aufweist, welcher aus den Bauarten SMDS-Konverter, Bergius-Pier- Konverter, Pier-Konverter, Mtl-Konverter oder aus Kombinationen daraus ausgewählt ist.

## Claims

1. Method for producing syngas, comprising the following steps:
a) splitting a hydrocarbon (1) into carbon (5) and hydrogen (6) using a plasma,
b) mixing steam (8) and carbon dioxide (9) with at least a portion of the product obtained in a) containing the main components carbon (5) and hydrogen (6), wherein a portion of the carbon (5) obtained by the splitting is converted in an endothermic reaction with steam (8) to carbon monoxide and hydrogen, preferably at temperatures in the range of 800°C to 1700°C and a portion of the carbon (5) obtained by the splitting is converted in another endothermic reaction with the carbon dioxide (9) to carbon monoxide, preferably at temperatures in the range of 800°C to 1700°C and wherein heat is supplied to the endothermal reaction in order to ensure maximum conversion of carbon (5), and
c) quenching (13) the product stream of step b).

2. Method according to claim 1, wherein in step b), mixing of carbon dioxide (9) takes place before mixing of steam (8).

3. Method according to claim 1 or 2, wherein in step b), the supply of heat (10) is carried out by electric heating and/or co-combustion of hydrocarbons.

4. Method according to one of the previous claims, wherein in step c), the product stream is quenched to a temperature of 400°C or below 400°C.

5. Method according to one of the previous claims, wherein the quenching (13) according to step c) is carried out by injection von water (63), heat dissipation by means of an endothermic reaction, or heat transfer in a heat exchanger (64), wherein in the latter case, the temperature of the gas mixture after quenching (13) does not drop below the dew point temperature.

6. Method according to one of the previous claims, wherein the product ratio of hydrogen to carbon monoxide is regulated via the supply ratio of steam (8) to carbon dioxide (9).

7. Method according to claim 6, wherein a ratio of hydrogen to carbon monoxide is set in a range of 1.75:1 to 1.95:1.

8. Method according to one of the previous claims, wherein in step b), the temperatures are in a range of 900°C to 1500°C.

9. Method according to one of the previous claims, wherein step a) is carried out in one or a plurality of hydrocarbon converters (2) at an operating pressure in the range of 1 bar to 50 bar.

10. Method according to one of the previous claims, further including a step d):
d) producing synthetic functionalized and/or non-functionalized hydrocarbons (91, 19) from at least a portion of the syngas (3) that was formed in step c) of the method according to claim 1.

11. Method according to claim 1 or 2, wherein in step b), the supply of heat (10) is carried out by adding preheated carbon dioxide and/or water.

12. Plant for carrying out a method according to one of claims 1-11, which comprises the following:
a plasma-operated hydrocarbon converter (2) having at least one inlet for a fluid including hydrocarbon (1) and at least one common outlet for carbon (5) and hydrogen (6);
a C converter (7), C = carbon, having at least one inlet for carbon (5) and hydrogen (6), at least one inlet for water (8), and at least one inlet for carbon dioxide (9), as well as at least one outlet for syngas (3),
wherein the at least one inlet for carbon (5) and hydrogen (6) of the C converter (7) is connected via a connecting line to an outlet for carbon (5) and hydrogen (6) of the hydrocarbon converter (2),
a heating device configured for suppling heat in step b), and
a quench (13) configured for quenching the product stream of step b).

13. Plant according to claim 12, further comprising a regulating device (71), which analyzes the composition of the gas mixture (3, 48) flowing from the C converter (7), and based thereon, regulates the volume flows of carbon dioxide (9) and water (8) entering the C converter (7) and thus the volume ratio of carbon dioxide (9) to water (8) such that the composition of the gases (3, 48) flowing from the C converter (7) has a component ratio of hydrogen to carbon monoxide that is in a range of 1.75:1 to 1.95:1.

14. Plant according to claim 12 or 13, wherein at least two of the plant components hydrocarbon converter (2), C converter (7), and quench (13) are arranged in an integral device housing (30).

15. Plant for producing synthetic functionalized and/or nonfunctionalized hydrocarbons by means of a plant according to one of claims 12 to 14, which further comprises
at least one CO converter (14), wherein said CO converter comprises a Fischer-Tropsch converter that is selected from the types of an SMDS converter, a Bergius-Pier converter, a Pier converter, an MtL converter, or combinations thereof.

## Revendications

1. Procédé destiné à produire un gaz de synthèse, comprenant les étapes suivantes:
a) le fractionnement d'un hydrocarbure (1) en carbone (5) et hydrogène (6) en utilisant un plasma,
b) le mélange de vapeur d'eau (8) et de dioxyde de carbone (9) avec au moins une partie du produit obtenu à l'étape a) comprenant les composants principaux carbone (5) et hydrogène (6), dans lequel une partie du carbone (5) obtenu par le fractionnement est convertie par une réaction endothermique avec la vapeur d'eau (8) en monoxyde de carbone et hydrogène, de préférence à des températures dans la plage allant de 800°C à 1700°C et une partie du carbone (5) obtenu par le fractionnement est convertie par une autre réaction endothermique avec le dioxyde de carbone (9), de préférence à des températures dans la plage allant de 800°C à 1700°C et dans lequel de la chaleur est fournie à la réaction endothermique afin d'assurer une conversion maximale du carbone (5), et
c) la trempe (13) des flux des produits de l'étape b).

2. Procédé selon la revendication 1, dans lequel, à l'étape b), le mélange du dioxyde de carbone (9) a lieu avant l'étape de mélange de la vapeur d'eau (8).

3. Procédé selon la revendication 1 ou 2, à l'étape b), l'apport de chaleur (10) est effectué par chauffage électrique et/ou par co-combustion d'hydrocarbures.

4. Procédé selon l'une des revendications précédentes, dans lequel, à l'étape c), les flux de produits sont trempés à une température de 400°C ou inférieure à 400°C.

5. Procédé selon l'une des revendications précédentes, dans lequel la trempe (13) selon l'étape c) est effectuée par injection d'eau (63), par dissipation thermique au moyen d'une réaction endothermique, ou d'un transfert de chaleur dans un échangeur de chaleur (64), dans lequel, dans ce dernier cas, la température du mélange gazeux après la trempe (13) ne chute pas en dessous de la température du point de rosée.

6. Procédé selon l'une des revendications précédentes, dans lequel le rapport des produits en hydrogène par rapport au monoxyde de carbone est régulé au moyen du rapport d'apport en vapeur d'eau (8) par rapport au dioxyde de carbone (9).

7. Procédé selon la revendication 6, dans lequel un rapport d'hydrogène par rapport au monoxyde de carbone est fixé dans une plage allant de 1,75:1 à 1,95:1.

8. Procédé selon l'une des revendications précédentes, dans lequel, à l'étape b), les températures sont dans une plage allant de 900°C à 1500°C.

9. Procédé selon l'une des revendications précédentes, dans lequel l'étape a) est effectuée dans un ou plusieurs convertisseurs d'hydrocarbures (2) à une pression de service dans la plage allant de 1 bar à 50 bar.

10. Procédé selon l'une des revendications précédentes, comportant en outre une étape d):
d) la production d'hydrocarbures synthétiques fonctionnalisés et/ou non fonctionnalisés (91, 19) à partir d'au moins une partie du gaz de synthèse (3) qui a été formé à l'étape c) du procédé selon la revendication 1.

11. Procédé selon la revendication 1 ou 2, dans lequel, à l'étape b), l'apport de chaleur (10) est effectué en ajoutant de l'eau et/ou du dioxyde de carbone préchauffé.

12. Installation destinée à mettre en œuvre un procédé selon l'une des revendications 1 à 11, comprenant les éléments suivants:
un convertisseur d'hydrocarbures actionné par plasma (2) ayant au moins une admission pour un fluide comportant des hydrocarbures (1) et au moins un échappement commun pour le carbone (5) et l'hydrogène (6);
un convertisseur C (7), C = carbone, ayant au moins une admission pour le carbone (5) et l'hydrogène (6), au moins une admission pour l'eau (8) et au moins une admission pour le dioxyde de carbone (9), ainsi qu'au moins un échappement pour le gaz de synthèse (3),
dans lequel ladite au moins une admission pour le carbone (5) et l'hydrogène (6) du convertisseur C (7) est reliée par une ligne de connexion à un échappement pour le carbone (5) et l'hydrogène (6) du convertisseur d'hydrocarbures (2),
un dispositif de chauffage configuré pour fournir de la chaleur à l'étape b), et
un refroidisseur (13) configuré pour tremper les flux des produits à l'étape b).

13. Installation selon la revendication 12, comprenant en outre un dispositif de commande (71), qui analyse la composition du mélange gazeux (3, 48) sortant du convertisseur C (7) et, sur la base de celle-ci, régule les flux volumiques du dioxyde de carbone (9) et de l'eau (8) entrant dans le convertisseur C (7) et ainsi le rapport volumique du dioxyde de carbone (9) par rapport à l'eau (8) de sorte que la composition des gaz (3, 48) sortant du convertisseur C (7) soit un rapport en composants de l'hydrogène par rapport au monoxyde de carbone qui soit dans une plage allant de 1,75:1 à 1,95:1.

14. Installation selon la revendication 12 ou 13, dans laquelle au moins deux parmi les éléments de l'installation
convertisseur d'hydrocarbures (2), convertisseur C (7), et refroidisseur (13) sont agencés dans un boîtier de dispositifs (30) d'une seule pièce.

15. Installation destinée à produire des hydrocarbures synthétiques fonctionnalisés et/ou non fonctionnalisés au moyen d'une installation selon l'une des revendications 12 à 14, comprenant en outre:
au moins un convertisseur CO (14), dans laquelle ledit convertisseur CO comprend un convertisseur Fischer-Tropsch qui est choisi parmi des types de convertisseur parmi un convertisseur SMDS, un convertisseur Bergius-Pier, un convertisseur Pier, un convertisseur Mtl ou leurs combinaisons.
